(19) Europäisches Patentamt
European Patent Office
Office européen des brevets

(11) EP 4 651 406 A1

(12) EUROPEAN PATENT APPLICATION
published in accordance with Art. 153(4) EPC

(43) Date of publication:
**19.11.2025 Bulletin 2025/47**

(21) Application number: **23920517.2**

(22) Date of filing: **10.02.2023**

(51) International Patent Classification (IPC):
***H04L 1/00*** *(2006.01)*

(52) Cooperative Patent Classification (CPC):
**H04L 5/0051; H04L 1/00; H04L 5/00**

(86) International application number:
**PCT/CN2023/075461**

(87) International publication number:
**WO 2024/164309 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHANG, Shichang**
**Dongguan, Guangdong 523860 (CN)**

(74) Representative: **RGTH Patentanwälte PartGmbB**
**Neuer Wall 10**
**20354 Hamburg (DE)**

# (54) COMMUNICATION METHODS, TERMINAL DEVICES, AND NETWORK DEVICES

(57) Provided are communication methods, terminal devices, and network devices. A method comprises: a first terminal device receives first information sent by a network device, wherein the first information is used for indicating a resource used for SL PRS transmission. The first terminal device may be a terminal device for transmitting an SL PRS. By means of reception of the first information, the first terminal device can acquire the resource used for SL PRS transmission, thereby accurately transmitting SL PRSs.

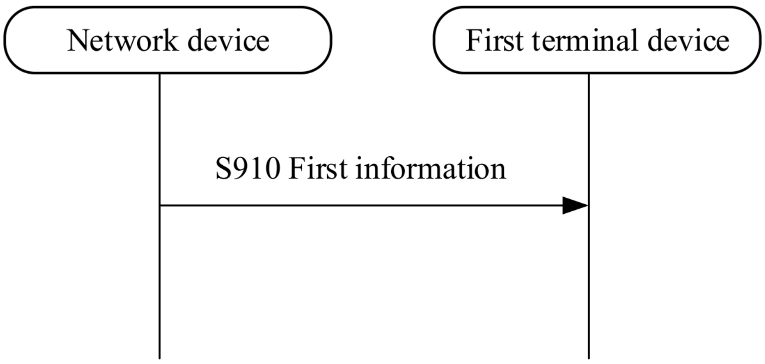


FIG. 9

EP 4 651 406 A1

## Description

### TECHNICAL FIELD

This application relates to the field of communications technologies, and more specifically, to a communication method, a terminal device, and a network device.

### BACKGROUND

To improve positioning accuracy, a positioning reference signal (sidelink positioning reference signal, SL PRS) is studied in a related technology. It is difficult for a terminal device to determine a resource used for transmitting an SL PRS, and thus it is difficult to implement accurate transmission of the SL PRS. For example, in a case that a network device allocates a resource used for transmitting an SL PRS, a transmitting terminal device of the SL PRS cannot determine the resource allocated by the network device, resulting in that the transmitting terminal device cannot transmit the SL PRS. A receiving terminal device of the SL PRS cannot determine the resource used for transmitting the SL PRS, resulting in failing to accurately receive the SL PRS.

### SUMMARY

This application provides a communication method, a terminal device, and a network device. Various aspects of this application are described below.

According to a first aspect, a communication method is provided. The method includes: receiving, by a first terminal device, first information transmitted by a network device, where the first information is used to indicate a resource used for transmitting an SL PRS.

According to a second aspect, a communication method is provided. The method includes: transmitting, by a first terminal device, second information to a second terminal device, where the second information is used to indicate a resource used for transmitting an SL PRS.

According to a third aspect, a communication method is provided. The method includes: transmitting, by a network device, first information to a first terminal device, where the first information is used to indicate a resource used for transmitting an SL PRS.

According to a fourth aspect, a communication method is provided. The method includes: receiving, by a second communications device, second information transmitted by a first communications device, where the second information is used to indicate a resource used for transmitting an SL PRS.

According to a fifth aspect, a terminal device is provided. The terminal device is a first terminal device, and the terminal device includes: a first receiving unit, configured to receive first information transmitted by a network device, where the first information is used to indicate a resource used for transmitting an SL PRS.

According to a sixth aspect, a terminal device is provided. The terminal device is a first terminal device, and the terminal device includes: a first transmitting unit, configured to transmit second information to a second terminal device, where the second information is used to indicate a resource used for transmitting an SL PRS.

According to a seventh aspect, a network device is provided, including: a second transmitting unit, configured to transmit first information to a first terminal device, where the first information is used to indicate a resource used for transmitting a sidelink positioning reference signal SL PRS.

According to an eighth aspect, a terminal device is provided. The terminal device is a second terminal device, and the terminal device includes: a second receiving unit, configured to receive second information transmitted by a first terminal device, where the second information is used to indicate a resource used for transmitting a sidelink positioning reference signal SL PRS.

According to a ninth aspect, a terminal device is provided, including a processor and a memory. The memory is configured to store one or more computer programs, and the processor is configured to invoke the computer program in the memory to cause the terminal device to execute some or all of the steps in the method according to one or more of the first aspect, the second aspect, or the fourth aspect.

According to a tenth aspect, a network device is provided, including a processor, a memory, and a transceiver. The memory is configured to store one or more computer programs, and the processor is configured to invoke the computer program in the memory to cause the network device to execute some or all of the steps in the method according to the third aspect.

According to an eleventh aspect, an embodiment of this application provides a communications system, and the system includes the terminal device and/or the network device described above. In another possible design, the system may further include another device that interacts with the terminal device or the network device in the solutions provided in embodiments of this application.

According to a twelfth aspect, an embodiment of this application provides a computer-readable storage medium. The computer-readable storage medium stores a computer program, and the computer program causes a terminal device and/or a network device to execute some or all of the steps in the methods according to the foregoing aspects.

According to a thirteenth aspect, an embodiment of this application provides a computer program product. The computer program product includes a non-transitory computer-readable storage medium that stores a computer program, and the computer program is operable to cause a terminal device and/or a network device to execute some or all of the steps in the methods according to the foregoing aspects. In some implementations, the computer program product may be a software installation package.

According to a fourteenth aspect, an embodiment of this application provides a chip. The chip includes a memory and a processor, and the processor may invoke and run a computer program in the memory, to implement some or all of the steps in the methods according to the foregoing aspects.

The first terminal device may be a terminal device that transmits the SL PRS. By receiving the first information, the first terminal device can obtain the resource used for transmitting the SL PRS, thereby accurately transmitting the SL PRS. The second terminal device may be a terminal device that receives the SL PRS. By receiving the second information, the second terminal device can obtain the resource used for transmitting the SL PRS, thereby accurately receiving the SL PRS.

## BRIEF DESCRIPTION OF DRAWINGS

FIG. 1 is a schematic diagram of a wireless communications system to which embodiments of this application are applicable.
FIG. 2 is an example diagram of a slot for sidelink communication to which embodiments of this application are applicable.
FIG. 3 is an example diagram of another slot for sidelink communication to which embodiments of this application are applicable.
FIG. 4 is an example diagram of another slot for sidelink communication to which embodiments of this application are applicable.
FIG. 5 is an example diagram of a single-symbol DMRS frequency domain type 1.
FIG. 6 is an example diagram of PSCCH and PSSCH resource pools in NR-V2X.
FIG. 7 is an example diagram of a subframe in an NR system.
FIG. 8 is an example diagram of a process of determining a sidelink time domain resource.
FIG. 9 is a schematic flowchart of a communication method according to an embodiment of the application.
FIG. 10 is a schematic flowchart of another communication method according to an embodiment of this application.
FIG. 11 is an example diagram of an SL PRS resource division manner according to an embodiment of this application.
FIG. 12 is an example diagram of another SL PRS resource division manner according to an embodiment of this application.
FIG. 13 is a schematic diagram of resources occupied by a PSCCH and an SL PRS according to an embodiment of this application.
FIG. 14 is a schematic diagram of resources occupied by a PSCCH and an SL PRS according to an embodiment of this application.
FIG. 15 is a schematic structural diagram of a terminal device according to an embodiment of this application.
FIG. 16 is a schematic structural diagram of another terminal device according to an embodiment of this application.
FIG. 17 is a schematic structural diagram of a network device according to an embodiment of this application.
FIG. 18 is a schematic structural diagram of another terminal device according to an embodiment of this application.
FIG. 19 is a schematic structural diagram of a communications apparatus according to an embodiment of this application.

## DESCRIPTION OF EMBODIMENTS

The technical solutions in this application are described below with reference to the accompanying drawings. For ease of understanding, the following first describes terms and communication processes involved in this application with reference to FIG. 1 to FIG. 7.

### Communications system

FIG. 1 shows a wireless communications system 100 to which embodiments of this application are applicable.

The wireless communications system 100 may include a network device 110 and terminals 121 to 129. The network device 110 may provide communication coverage for a specific geographic area, and may communicate with a terminal located in the coverage.

In some implementations, terminals may communicate with each other over a sidelink (sidelink, SL). Sidelink communication may also be referred to as proximity services (proximity services, ProSe) communication, unilateral communication, side link communication, device-to-device (device to device, D2D) communication, or direct link communication.

In other words, sidelink data is transmitted between terminals over a sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a physical sidelink feedback channel (physical sidelink feedback channel, PSFCH), a sidelink synchronization signal block (Sidelink synchronization signal block, S-SSB), a channel state information reference signal (channel state information reference signal, CSI-RS), or a phase tracking reference signal (phase tracking reference signal, PT-RS). The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

With reference to FIG. 1, the following describes several common sidelink communication scenarios. Sidelink communication may be classified into three scenarios depending on whether terminals on a sidelink are located in coverage of the network device. In a scenario 1, the terminals perform sidelink communication within the coverage of the network device. In a scenario 2, some of the terminals perform sidelink communication within the coverage of the network device. In a scenario 3, the terminals perform sidelink communication outside the coverage of the network device.

As shown in FIG. 1, in the scenario 1, terminals 121 and 122 may communicate with each other over a sidelink, and the terminals 121 and 122 are both within the coverage of the network device 110. In other words, the terminals 121 and 122 are both within coverage of a same network device 110. In this scenario, the network device 110 may transmit configuration signalling to the terminals 121 and 122, and accordingly, the terminals 121 and 122 communicate with each other over the sidelink based on the configuration signalling.

As shown in FIG. 1, in the scenario 2, terminals 123 and 124 may communicate with each other over a sidelink, the terminal 123 is within the coverage of the network device 110, and the terminal 124 is outside the coverage of the network device 110. In this scenario, the terminal 123 receives configuration information from the network device 110, and performs communication over the sidelink based on a configuration of configuration signalling. However, since the terminal 124 is outside the coverage of the network device 110, the terminal 124 cannot receive the configuration information from the network device 110. In this case, the terminal 124 may obtain a configuration of sidelink communication based on pre-configured (pre-configuration) configuration information and/or configuration information transmitted by the terminal 123 within the coverage, so that the terminal 124 communicates with the terminal 123 over the sidelink based on the obtained configuration.

In some cases, the terminal 123 may transmit the configuration information to the terminal 124 through a sidelink broadcast channel (physical sidelink broadcast channel, PSBCH), to instruct the terminal 124 to perform communication over the sidelink.

As shown in FIG. 1, in the scenario 3, terminals 125 to 129 are all outside the coverage of the network device 110 and cannot communicate with the network device 110. In this case, all the terminals may perform sidelink communication based on pre-configuration information.

In some cases, the terminals 127 to 129 outside the coverage of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; joining and deleting of the cluster members; resource coordination, allocation of sidelink transmission resources for the cluster members, and receiving of sidelink feedback information from the cluster members; resource coordination with another communication cluster; or the like.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communications system, such as a 6th generation mobile communications system or a satellite communications system.

The terminal in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, UE may function as a base station. For example, the UE may function as a scheduling entity, which provides sidelink data between UEs in V2X, D2D, or the like. For example, a cellular phone and a vehicle communicate with each other by using sidelink data. A cellular phone and a smart household device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or replace with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network side device in a 6G network, a device that functions as a base station in a future communications system, or the like. The base station may support networks with a same access technology or different access technologies. A specific technology and a specific device used by the network device are not limited in embodiments of this application.

The base station may be fixed or mobile. For example, a helicopter or an unmanned aerial vehicle may be configured to function as a mobile base station, and one or more cells may move based on a location of the mobile base station. In another example, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

## Slot structure for sidelink communication

With reference to FIG. 2 and FIG. 3, the following describes a slot structure for sidelink communication to which embodiments of this application are applicable.

In some sidelink communications systems (for example, NR-V2X), a PSSCH and a PSCCH associated with the PSSCH may be transmitted in a same slot. The PSCCH may occupy two or three time domain symbols. Time domain resource allocation in these sidelink communications systems may be performed at a slot granularity. A start point and a length of a time domain symbol used for sidelink transmission in one slot may be configured based on a parameter start symbol location (sl-startSLsymbols) and a symbol quantity (sl-lengthSLsymbols). A last symbol in symbols used for sidelink transmission is a guard period (guard period, GP) symbol. The PSSCH and the PSCCH can only use time domain symbols other than the GP. However, if a PSFCH transmission resource is configured in one slot, the PSSCH and the PSCCH cannot occupy a time domain symbol used for PSFCH transmission, and automatic gain control (automatic gain control, AGC) and GP symbols before the symbol.

As shown in FIG. 2, a network configures sl-StartSymbol = 3 and sl-LengthSymbols = 11, that is, 11 time domain symbols starting from a symbol index 3 in one slot may be used for sidelink transmission. In the slot shown in FIG. 2, there is a transmission resource of a PSFCH, and the PSFCH occupies a symbol 11 and a symbol 12, where the symbol 11 may serve as an AGC symbol of the PSFCH. Symbols 10 and 13 may serve as GPs. Time domain symbols that may be used for PSSCH transmission are a symbol 3 to a symbol 9, and the PSCCH occupies three time domain symbols, that is, symbols 3, 4, and 5. The symbol 3 is generally an AGC symbol.

In addition to a PSCCH and a PSSCH, a PSFCH may be included in one sidelink slot. FIG. 3 is an example diagram of a slot structure including a PSFCH. As shown in FIG. 3, in one slot, a $1^{st}$ OFDM symbol is fixed for AGC. On an AGC symbol, a terminal device may copy information transmitted on a $2^{nd}$ symbol. At the end of the slot, one symbol is reserved for transmitting-receiving conversion, so that the terminal device switches from a transmit (or receive) state to a receive (or transmit) state. In remaining OFDM symbols, a PSCCH may occupy two or three OFDM symbols starting from a $2^{nd}$ sidelink symbol. In frequency domain, a quantity of PRBs occupied by the PSCCH falls within a subband range of one PSSCH. If the quantity of PRBs occupied by the PSCCH is less than that occupied by one subchannel of the PSSCH, or a frequency domain resource of the PSSCH includes a plurality of subchannels, the PSCCH may be frequency-division multiplexed with the PSSCH on an OFDM symbol in which the PSCCH is located.

A plurality of time domain PSSCH DMRS patterns are adopted in some sidelink communications systems (for example, an NR-V2X system), that is, a design in a Uu interface of an NR system is used for reference. In one resource pool, a quantity of available DMRS patterns may be related to a quantity of PSSCH symbols in the resource pool. For specific quantities of PSSCH symbols (including a $1^{st}$ AGC symbol) and PSCCH symbols, an available DMRS pattern and a location of each DMRS symbol in the pattern are shown in Table 1. FIG. 4 is a schematic diagram of time domain locations of four DMRS symbols when a quantity of PSSCH symbols is 14.

Table 1

| Quantity of PSSCH symbols (including $1^{st}$ AGC symbol) | Location of a DMRS symbol (relative to a location of $1^{st}$ AGC symbol) | | | | | |
|---|---|---|---|---|---|---|
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in a resource pool, a used time domain DMRS pattern may be selected by a transmitting terminal device, and is indicated in first-order sidelink control information (sidelink control information, SCI). In this design, a high-speed moving terminal device is allowed to select a high-density DMRS pattern, thereby ensuring accuracy of channel estimation; and a low-speed moving terminal device may use a low-density DMRS pattern, thereby improving spectrum efficiency.

A generation manner of a PSSCH DMRS sequence is almost the same as a generation manner of a PSCCH DMRS sequence. The only difference lies in an initialization formula $c_{init}$ of a pseudo-random sequence c(m), where

$N_{ID} = \sum_{i=0}^{L-1} p_i \cdot 2^{L-1-i}$. $p_i$ represents an ith-bit CRC of the PSCCH that schedules the PSSCH. L represents a quantity of PSCCH CRC bits, for example, $L$=24.

In an NR communications system, a PDSCH and a PUSCH support two frequency domain DMRS patterns: a DMRS frequency domain type 1 and a DMRS frequency domain type 2. For each frequency domain type, there may be two different types: a single-symbol DMRS type and a double-symbol DMRS type. A single-symbol DMRS frequency domain type 1 supports four DMRS ports, and a single-symbol DMRS frequency domain type 2 may support six DMRS ports. In a case of the double-symbol DMRS type, a quantity of supported ports is doubled. However, in some sidelink communications systems (for example, NR-V2X), because a PSSCH may only need to support at most two DMRS ports, only the single-symbol DMRS frequency domain type 1 may be supported. FIG. 5 is an example diagram of a single-symbol DMRS frequency domain type 1.

**Determining of a frequency domain resource for sidelink communication**

Frequency domain resources of a resource pool in some sidelink communications systems (for example, NR-V2X) are consecutive, and frequency domain resource allocation is performed at a subchannel granularity. Quantities of physical resource blocks (physical resource block, PRB) included in one subchannel are {10, 12, 15, 20, 50, 75, 100}. A smallest subchannel size may be 10 PRBs, and is far greater than a smallest subchannel size 4 PRBs in LTE-V2X. This is mainly because a frequency domain resource of a PSCCH in these sidelink communications systems is located in a 1st subchannel of a PSSCH associated with the PSCCH, the frequency domain resource of the PSCCH is less than or equal to a size of a subchannel of the PSSCH, and a time domain resource of the PSCCH occupies two or three OFDM symbols. If a subchannel size is configured to be relatively small, resulting in that available resources of the PSCCH are few, a code rate is increased, and detection performance of the PSCCH is reduced. In these sidelink communications systems, a subchannel size of a PSSCH and a size of a frequency domain resource of a PSCCH are independently configured. However, it should be ensured that the size of the frequency domain resource of the PSCCH is less than or equal to the subchannel size of the PSSCH. The following configuration parameters in resource pool configuration information are used to determine frequency domain resources of PSCCH and PSSCH resource pools: a subchannel size (sl-SubchannelSize), a subchannel quantity (sl-NumSubchannel), a subchannel start RB index (sl-StartRB-Subchannel), a PRB quantity (sl-RB-Number), and a PSCCH frequency domain resource indicator (sl-FreqResourcePSCCH).

The parameter sl-SubchannelSize is used to indicate a quantity of consecutive PRBs included in one subchannel in a resource pool, and a value of the parameter is selected from {10, 12, 15, 20, 50, 75, 100} PRBs.

The parameter sl-NumSubchannel may be used to indicate a quantity of subchannels included in a resource pool.

The parameter sl-StartRB-Subchannel may be used to indicate a start PRB index of a 1st subchannel in a resource pool.

The parameter sl-RB-Number may be used to indicate a quantity of consecutive PRBs included in a resource pool.

The parameter sl-FreqResourcePSCCH may be used to indicate a frequency domain resource size of a PSCCH, and a value of the parameter is selected from {10, 12, 15, 20, 25} PRBs.

When a terminal device determines a resource pool used for PSSCH transmission or reception, a frequency domain resource included in the resource pool is sl-NumSubchannel consecutive subchannels starting from a PRB indicated by sl-StartRB-Subchannel. If a final quantity of PRBs included in the sl-NumSubchannel consecutive subchannels is less than the PRB quantity indicated by sl-RB-Number, remaining PRBs cannot be used for PSSCH transmission or reception.

In some sidelink communications systems (for example, NR-V2X), frequency domain start locations of a PSCCH and a 1st subchannel of a PSSCH associated with the PSCCH are aligned. Therefore, a start location of each PSSCH subchannel is a possible frequency domain start location of the PSCCH. Frequency domain ranges of the PSCCH and PSSCH resource pools may be determined based on the foregoing parameters, as shown in FIG. 6. FIG. 6 is an example diagram of PSCCH and PSSCH resource pools in NR-V2X.

In some sidelink communications systems (for example, NR-V2X), a PSCCH is configured to carry sidelink control information related to resource listening. The sidelink control information may include: a priority of scheduled transmission, frequency domain resource allocation, time domain resource allocation, a reference signal pattern of a PSSCH, a second-order SCI format, a second-order SCI code rate offset, a quantity of PSSCH DMRS ports, a modulation and coding scheme (modulation and coding scheme, MCS), an MCS table indication, a PSFCH symbol quantity, a resource reservation period, and a reserved bit. It should be noted that the frequency domain resource allocation is used to indicate a quantity of frequency domain resources of a PSSCH scheduled in a current slot by using a PSCCH, and a quantity of frequency domain resources of at most two reserved retransmission resources and start locations thereof. The time domain resource allocation is used to indicate time domain locations of at most two retransmission resources. The resource reservation period is used to reserve a resource used for transmitting another transport block (transport block, TB) in a next period. In addition, if resource reservation between TBs is not activated in the resource pool configuration, an information bit field of the resource reservation period does not exist. A quantity of reserved bits is 2 bits to 4 bits, and a specific bit quantity may be configured or preconfigured by a network device.

Because a PSCCH and a scheduled PSSCH are always transmitted in one slot, and a start location of a PRB occupied by the PSCCH is a start location of a $1^{st}$ subchannel of the scheduled PSSCH, a start location of the scheduled PSSCH in time-frequency domain is not explicitly indicated in an SCI format 1-A.

**Determining of a time domain resource (slot) for sidelink communication**

In some sidelink communications systems (for example, NR-V2X), PSCCH/PSSCH transmission is based on a slot level, that is, only one PSCCH/PSSCH can be transmitted in one slot. A plurality of PSCCHs/PSSCHs cannot be transmitted in a time division multiplexing (time division multiplexing, TDM) manner in one slot. PSCCHs/PSSCHs between different users may be multiplexed in a frequency division multiplexing (frequency division multiplexing, FDM) manner in one slot.

A time domain resource of a PSSCH in NR-V2X may be at a slot granularity. In LTE-V2X, a PSSCH occupies all time domain symbols in one subframe. In NR-V2X, the PSSCH may occupy a part of symbols in one slot. This is mainly because in an LTE system, uplink or downlink transmission is performed at a subframe granularity. Therefore, sidelink transmission is also performed at a subframe granularity (a special subframe in a TDD system is not used for sidelink transmission). In an NR system, a flexible slot structure is used. To be specific, one slot includes both an uplink symbol and a downlink symbol, so that more flexible scheduling can be implemented and a delay can be reduced. A typical subframe of the NR system is shown in FIG. 7. As shown in FIG. 7, a slot may include a downlink (downlink, DL) symbol, an uplink (uplink, UL) symbol, and a flexible (flexible) symbol. The downlink symbol is located at a start location of the slot, and the uplink symbol is located at an end location of the slot. The flexible symbol is arranged between the downlink symbol and the uplink symbol. A quantity of symbols in each slot is configurable.

A sidelink transmission system may share a carrier with a cellular system. In this case, sidelink transmission can only use an uplink transmission resource of the cellular system. For NR-V2X, if sidelink transmission needs to occupy all time domain symbols in one slot, a network needs to configure all uplink symbols in one slot for sidelink transmission. In this way, uplink and downlink data transmission in the NR system is greatly affected, and system performance is reduced. Therefore, in NR-V2X, a part of time domain symbols in the slot can be used for sidelink transmission, that is, a part of uplink symbols in one slot are used for sidelink transmission. In addition, if a quantity of uplink symbols that can be used for sidelink transmission is relatively small, except for an AGC symbol and a GP symbol, there are fewer remaining symbols that can be used to transmit valid data, resulting in a very low resource utilization. Therefore, a quantity of time domain symbols occupied for sidelink transmission in NR-V2X is at least seven (including a GP symbol). When the sidelink transmission system uses a dedicated carrier, a problem of sharing a transmission resource with another system does not exist, and all symbols in a slot may be configured for sidelink transmission.

In the NR-V2X system, a time domain resource of a resource pool may be indicated by using a bitmap. In consideration of a flexible slot structure in the NR system, a length of the bitmap is also extended in the NR-V2X system, and a supported length range of the bitmap is [10:160]. A manner of determining, by using the bitmap, a location of a slot belonging to a resource pool in one system frame number (system frame number, SFN) period in NR-V2X is substantially the same as that in LTE-V2X, but there are two differences for the two manners. First, a total quantity of slots included in one SFN period is $10240 \times 2^{\mu}$, where the parameter $\mu$ is related to a value of a subcarrier spacing. Second, if at least one time domain symbol in time domain symbols $Y, Y+1, Y+2, ..., Y+X-1$ included in one slot is not configured as an uplink symbol by using TDD-UL-DL-ConfigCommon signalling of the network, the slot cannot be used for sidelink transmission. Y and X respectively represent sl-StartSymbol and sl-LengthSymbols.

A process of determining a time domain resource of a resource pool may include the following step 1 to step 5.

In step 1, slots that do not belong to a resource pool are eliminated in an SFN period, including a synchronization slot and a slot that cannot be used for sidelink transmission. Remaining slots are expressed as a remaining slot set, and the remaining slots are renumbered as $(l_0, l_1, \cdots, l_{(10240\times 2^{\mu}-N_{S_SSB}-N_{nonSL}-1)})$.

$N_{S_SSB}$ represents a quantity of synchronization slots in one SFN period. The synchronization slot is determined based on a synchronization related configuration parameter, and is related to a period for transmitting an SSB and a quantity of configured transmission resources of the SSB in the period. $N_{nonSL}$ represents a quantity of slots that do not meet a requirement of an uplink symbol start point and a quantity configuration in one SFN period. If at least one time domain symbol in time domain symbols $Y, Y+1, Y+2, ..., Y+X-1$ included in one slot is not semi-statically configured as an uplink symbol, the slot cannot be used for sidelink transmission. Y and X respectively represent sl-StartSymbol and sl-LengthSymbols.

In step 2, a quantity of reserved slots and a corresponding time domain location are determined. If a quantity of slots in the remaining slot set cannot be exactly divided by the length of the bitmap, the quantity of reserved slots and the corresponding time domain location need to be determined. Specifically, if a slot $l_r$ ($0 \le r < 10240 \times 2^{\mu} - N_{S_SSB} - N_{nonSL}$) meets the following condition, the slot is a reserved slot, where $r = \left\lfloor \frac{m \cdot (10240 \times 2^{\mu} - N_{S_SSB} - N_{nonSL})}{N_{reserved}} \right\rfloor$. $N_{reserved}$ = $(10240 \times 2^{\mu} - N_{S_SSB} - N_{nonSL})\ mod\ L_{bitmap}$, and represents a quantity of reserved slots, $L_{bitmap}$ represents the length of the bitmap, and m = 0,..., $N_{reserved}$ - 1.

In step 3, a reserved slot is eliminated from the remaining slot set, where the remaining slot set is represented as a logical slot set, all slots in the slot set are slots that can be used for the resource pool, and the slots in the logical slot set are renumbered as ( $t_0^{SL}, t_1^{SL}, \ldots, t_{T_{max}-1}^{SL}$ ), where $T_{max} = 10240 \times 2^{\mu} - N_{S_SSB} - N_{nonSL} - N_{reserved}$.

In step 4, based on the bitmap, a slot that is in the logical slot set and that belongs to the resource pool is determined.

A bitmap in resource pool configuration information is ($b_0$, $b_1$,..., $b_{\mathrm{Lbitmap}-1}$). For a slot $t_k^{SL}\left(0 \le k < \left(10240 \times 2^{\mu} - N_{S_SSB} - N_{nonSL} - N_{reserved}\right)\right)$ in the logical slot set, when $b_{k'} = 1$ is satisfied, the slot is a slot belonging to the resource pool, where $k' = k\ mod\ L_{bitmap}$.

In step 5, the slot that is determined in step 4 and that belongs to the resource pool is renumbered as $t'^{SL}_i$, where $i \in \{0, 1, ..., T'_{max} - 1\}$, and $T'_{max}$ represents a quantity of slots included in the resource pool.

As shown in FIG. 8, one SFN period (or a direct frame number (direct frame number, DFN) period) includes 10240 subframes, a synchronization signal period is 160 ms, and two synchronization subframes are included in one synchronization period. Therefore, there are 128 synchronization subframes in one SFN period, and a length of a bitmap (bitmap) used to indicate a time domain resource of a resource pool is 10 bits. Therefore, two reserved subframes (reserved subframe) are required, and a quantity of remaining subframes is (10240 - 128 - 2 = 10110), which can be exactly divided by the length 10 of the bitmap. The remaining subframes are renumbered as 0, 1, 2, ..., 10109. First three bits of the bitmap are 1, and remaining seven bits are 0. That is, in remaining subframes, first three subframes in every 10 subframes belong to the resource pool, and remaining subframes do not belong to the resource pool. The bitmap needs to be repeated for 1011 times in the remaining subframes to indicate whether all subframes belong to the resource pool, and three subframes are included in each bitmap period. Therefore, a total of 3033 subframes in one SFN period belong to the resource pool.

## Resource allocation manner in sidelink communication

Currently, in some communications systems (for example, NR), two resource configuration manners of sidelink resources, a mode 1 (mode 1) and a mode 2 (mode 2), are defined.

In the mode 1, a network device schedules a sidelink resource for a terminal device.

For example, referring to FIG. 1, the terminal devices 121 to 123 are within the coverage of the network device 110, and the network device 110 may allocate sidelink resources to the terminal devices 121 to 123.

In the mode 2, a terminal device independently selects a sidelink resource from a resource pool.

In this mode, a process executed by the terminal device includes a resource probing process and/or a resource selection process. In the resource probing process, the terminal device may detect occupancy of a sidelink resource by demodulating SCI. Alternatively, the terminal device may detect occupancy of a sidelink resource by measuring a received power of a sidelink.

For example, referring to FIG. 1, the terminal devices 124 to 129 are outside the coverage of the network device 110, and the terminal devices 124 to 129 may independently select a sidelink resource in the manner described in the foregoing mode 2.

## Resource selection mode 1 in NR V2X

Resource allocation mode 1 includes dynamic resource allocation and a sidelink configured grant.

The configured grant includes a type-1 (type-1) sidelink configured grant and a type-2 (type-2) sidelink configured grant. In the type-1 sidelink configured grant, a network device configures a sidelink configured grant transmission resource and a transmission parameter for a terminal device by using radio resource control (radio resource control, RRC) signalling. In the type-2 sidelink configured grant, a network device configures a part of transmission parameters for a terminal device by using RRC signalling, and activates the sidelink configured grant by using downlink control information (downlink control information, DCI) signalling. The DCI may be further used to configure a sidelink transmission resource.

The dynamic resource allocation manner is a resource allocation manner in which the network device dynamically allocates a sidelink transmission resource to the terminal device by using DCI. In the dynamic resource allocation manner, at most three sidelink transmission resources are indicated in one DCI scheduling, and the three sidelink transmission resources are used to transmit a same TB. In addition, as described above, a PSFCH is introduced into some communications systems (for example, an NR-V2X system) to improve reliability of sidelink transmission. In dynamic scheduling resource allocation, the network device allocates a sidelink transmission resource to a transmitting terminal device, and the transmitting terminal device transmits a PSCCH/PSSCH to a receiving terminal device on the sidelink transmission resource allocated by the network. The receiving terminal device transmits a PSFCH to a transmit end based on a detection result. The PSFCH is used to indicate whether the PSSCH is correctly received.

To support dynamic resource allocation, a new DCI format, that is, a DCI format 3_0 (DCI format 3_0), is introduced into some communications systems (for example, an NR-V2X system). When being used for dynamic resource allocation, the DCI format is scrambled by using a sidelink-radio network temporary identifier (sidelink-radio network temporary identifier, SL-RNTI). In addition, the DCI format may be used to activate or deactivate a sidelink configured grant. In this case, the DCI is scrambled by using a side link-configured scheduling-radio network temporary identifier (sidelink-configured scheduling-radio network temporary identifier, SL-CS-RNTI).

The DCI format 3_0 mainly includes the following information: a resource pool index (resource pool index), sidelink transmission resource indication information, PUCCH transmission resource indication information, a HARQ process number (HARQ process number), a new data indicator (new data indicator, NDI), a configuration index (configuration index), and a counter sidelink grant index (counter sidelink assignment index). The following separately describes the foregoing information.

1. Resource pool index

In some communications systems (for example, an NR-V2X system), the network device can configure a plurality of mode 1 resource pools. When a sidelink transmission resource is scheduled by using DCI, resource pool index information needs to be indicated in the DCI. The terminal device may determine, based on the resource pool index information, a resource pool to which the sidelink transmission resource scheduled by the DCI belongs.

2. Sidelink transmission resource indication information

The network device may allocate N sidelink transmission resources to the terminal device for transmitting a PSCCH and a PSSCH, where $1 \leq N \leq N_{max}$. $N_{max}$ may be 2 or 3. $N_{max}$ may be preconfigured or configured by the network. The network device indicates time domain and frequency domain information of the N sidelink transmission resources in the DCI. Specifically, the time-frequency resource information of the N sidelink transmission resources is indicated in the DCI by using the following information fields: a time interval (time gap), time domain resource allocation (time resource assignment), a frequency domain start subchannel indication for initial transmission (lowest index of the subchannel allocation to the initial transmission), and frequency domain resource allocation (frequency resource assignment). The following separately describes the foregoing information fields.

The time interval is used to indicate a slot interval between a 1st sidelink transmission resource and a slot in which the DCI is located. A time domain location of the 1st sidelink transmission resource may be determined based on the information and a time domain location at which the terminal device receives the DCI. The network configures a time interval table by using higher layer signalling sl-DCI-ToSL-Trans, where an element in the table represents a quantity of sidelink slots, and the parameter carried in the DCI is an index value. A specific time interval value may be determined based on the index value and the time interval table. A slot in which the 1st sidelink transmission resource is located is a 1st slot not earlier than an instant $T_{\mathrm{DL}} - \frac{T_{\mathrm{TA}}}{2} + K_{SL} \times T_{\mathrm{slot}}$ in the resource pool. $T_{\mathrm{DL}}$ is an instant corresponding to a start location of a downlink slot in which the DCI is located, $T_{\mathrm{TA}}$ is a current timing advance (Time Advance) of scheduled UE, $K_{SL}$ is a quantity of slots corresponding to a time interval determined based on the time interval information field in the DCI, and $T_{\mathrm{slot}}$ represents duration of a slot.

A manner in which the time domain resource allocation information field indicates a time domain resource is the same as that in the SCI format 1-A. This parameter is represented by a time domain resource indication value (time resource indication value, TRIV). This parameter is used to determine slot intervals of $N$ - 1 sidelink transmission resources other than the 1st sidelink transmission resource relative to the 1st sidelink transmission resource. Time domain locations of the remaining $N$ - 1 transmission resources may be determined based on the foregoing determined time domain location of the 1st transmission resource and with reference to the information.

The frequency domain start subchannel indication information field for initial transmission is used to indicate a lowest index of a subchannel occupied by the 1st sidelink transmission resource. Frequency domain start locations of a PSCCH and a PSSCH are aligned. Therefore, the frequency domain start locations of the PSCCH and the PSSCH may be determined based on the information.

A manner in which the frequency domain resource allocation information field indicates a frequency domain resource is the same as that in the SCI format 1-A. This parameter is represented by a frequency domain resource indication value (frequency resource indication value, FRIV), and is used to determine a frequency domain resource size (that is, a quantity of subchannels) of a sidelink transmission resource and frequency domain start locations of N-1 sidelink transmission resources other than the 1st sidelink transmission resource.

3. PUCCH transmission resource indication information

The PUCCH transmission resource indication information is used to instruct the terminal to report a PUCCH transmission resource of sidelink HARQ feedback information to the network. In the DCI format 3-0, two information fields are used to indicate the PUCCH transmission resource.

4. HARQ process number information

The HARQ process number information is used to indicate a HARQ process number corresponding to a sidelink transmission resource allocated by the network to the terminal.

5. New data indicator

When a sidelink transmission resource scheduled in the DCI format 3-0 is used for new data transmission, the NDI is inverted; otherwise, the NDI is not inverted.

6. Configuration index

When the terminal device is configured with an SL-CS-RNTI, the DCI format 3_0 may be used to activate or deactivate a type-2 sidelink configured grant. The network device may configure a plurality of parallel type-2 sidelink configured grants, and the configuration index is used to indicate a sidelink configured grant activated or deactivated by using the DCI. When the terminal device is configured with no SL-CS-RNTI, the information field is 0 bits.

7. Counter sidelink grant index

The counter sidelink grant index is used to indicate a quantity of pieces of accumulative DCI that are used to schedule a sidelink transmission resource and that are transmitted by the network device. When the terminal device reports sidelink HARQ feedback information to the network device, the terminal device may determine, based on the information, a quantity of information bits included in a generated HARQ-ACK codebook.

**Sidelink-based positioning**

In the 3rd generation partnership project (3rd generation partnership project, 3GPP) R-17, 3GPP RAN studies "NR positioning enhancement" and "scenarios and requirements of in-coverage, partial coverage, and out-of-coverage NR positioning use cases". The study on "scenarios and requirements of in-coverage, partial coverage, and out-of-coverage NR positioning use cases" focuses on V2X and public safety use cases. In addition, the 3GPP SA 1 working group formulates a "ranging-based service" requirement, and formulates a positioning accuracy requirement for use of an industrial internet of things (industrial interest of things, IIoT) in an out-of-coverage scenario. 3GPP needs to study and develop a sidelink positioning solution to support use cases, scenarios, and requirements determined in these activities.

To improve positioning accuracy, especially to implement positioning of a terminal device outside coverage of a cellular network, 3GPP completes feasibility and performance research of a sidelink positioning reference signal-based positioning technology in an earlier stage of Rel-18. Next, a sidelink positioning (including ranging/direction measurement)-based solution in an NR system will be standardized.

The following describes standardized content. In one aspect, a sidelink positioning reference signal (sidelink positioning reference signal, SL PRS) is standardized. The SL PRS uses an interlaced-shaped (a full resource element (resource element, RE) mapping mode is not excluded) based frequency domain structure, uses a sequence format of a pseudo-random sequence, and takes an existing DL-PRS sequence as a design start point, to support an SL PRS bandwidth of at most 100 MHz in a frequency range 1 (frequency range, FR1). In another aspect, a measurement quantity is standardized to support sidelink round trip time (sidelink round trip time, SL RTT), sidelink angle of arrival (sidelink angle of arrival, SL-AOA), and sidelink time difference of arrival (sidelink time difference of arrival, SL-TDOA) positioning methods. In yet another aspect, a resource allocation solution of the SL PRS is standardized, including a resource allocation solution 1 and a resource allocation solution 2. In the solution 1, the network device allocates a resource used for transmitting an SL PRS. In other words, the solution 1 corresponds to the foregoing resource allocation mode 1. In the solution 2, the terminal device independently selects a resource used for transmitting an SL PRS. In other words, this solution corresponds to the foregoing resource allocation mode 2. The SL PRS and Rel-16/17/18 sidelink communication can share a resource pool and an SL PRS dedicated resource pool. For the solution 2, at least one of resource selection based on channel listening, random resource selection, congestion control, or resource selection based on terminal device coordination needs to be studied and standardized. In addition, an open-loop power control mechanism for SL PRS transmission or the like is standardized.

In a case that the network device allocates the resource used for transmitting the SL PRS, a transmitting terminal device cannot determine the resource allocated by the network device, resulting in that the transmitting terminal device cannot transmit the SL PRS. In addition, if a receiving terminal device cannot determine the resource used for transmitting the SL PRS, the receiving terminal device cannot accurately receive the SL PRS. In other words, because a terminal device (including a transmitting terminal device and/or a receiving terminal device) in sidelink communication cannot obtain the resource used for transmitting the SL PRS, resulting in that it is difficult for the terminal device to implement accurate transmission of the SL PRS.

For the foregoing problem, this application proposes to indicate, by using first information or second information, the resource used for transmitting the SL PRS. The resource used for transmitting the SL PRS may be a slot and an OFDM symbol occupied by the SL PRS in time domain. In addition, the resource that is indicated by the first information or the second information and that is used for transmitting the SL PRS may be a resource currently used for transmitting an SL PRS, or may be a resource used for transmitting an SL PRS in the future. In some embodiments, the resource used for transmitting the SL PRS may also be referred to as an SL PRS transmission resource.

FIG. 9 is a schematic flowchart of a communication method according to an embodiment of the application. The method shown in FIG. 9 may be executed by a network device and a first terminal device. The method shown in FIG. 9 may include step S910. In step S910, the network device transmits first information. Correspondingly, the first terminal device receives the first information.

A resource that is indicated by the first information and that is used for transmitting an SL PRS may be allocated or determined by the network device. In other words, the resource used for transmitting the SL PRS may be determined through the mode 1 or the solution 1. For example, the network device may allocate the resource used for transmitting the SL PRS to the first terminal device, dynamically or in a manner of providing a configured grant for the first terminal device.

In an implementation, the network device may transmit the first information by using DCI and/or RRC layer signalling. That is, the first information may be included in the DCI and/or the RRC layer signalling. For example, the first information may be transmitted by using the DCI. That is, the network device may dynamically allocate, to the first terminal device by using the DCI, the resource used for transmitting the SL PRS. Alternatively, the first information may be transmitted by using the DCI and the RRC layer signalling. That is, the network device may provide a configured grant for the first terminal device by using the RRC layer signalling, and. When allocating a resource to the first terminal device, the network device may indicate, by using the DCI, the resource specifically used for transmitting the SL PRS.

The first terminal device may be a transmitting terminal device of the SL PRS. Based on the first information, the first terminal device can obtain resource scheduling information of the network device for the SL PRS, so that the SL PRS can be accurately transmitted based on the resource scheduling information.

FIG. 10 is a schematic flowchart of another communication method according to an embodiment of this application. FIG. 10 may be executed by a first terminal device and a second terminal device. The method shown in FIG. 10 may include step S1010. In step S1010, the first terminal device transmits second information. Correspondingly, the second terminal device receives the second information.

A resource used for transmitting an SL PRS in the second information may be allocated or determined by the network device, or a resource used for transmitting an SL PRS may be determined by the first terminal device. In other words, the resource used for transmitting the SL PRS may be determined through the mode 1 or the solution 1, or may be determined through the mode 2 or the solution 2. In a case that the resource used for transmitting the SL PRS is determined through the mode 1, the first terminal device may receive first information that is used by the network device to indicate the resource used for transmitting the SL PRS, and indicate, to the second terminal device by using the second information, the resource used for transmitting the SL PRS. In a case that the resource used for transmitting the SL PRS is determined through the mode 2, the first terminal device may independently determine the resource used for transmitting the SL PRS, and indicate, to the second terminal device by using the second information, the resource used for transmitting the SL PRS.

In an implementation, the first terminal device may transmit the second information by using higher layer signalling or SCI. That is, the second information may be included in the higher layer signalling and/or the SCI. The higher layer signalling may be PC5 higher layer signalling. The higher layer signalling may be medium access control (medium access control, MAC) layer signalling and/or RRC layer signalling.

In some embodiments, the first terminal device may be a transmitting terminal device of the SL PRS, and the second terminal device may be a receiving terminal device of the SL PRS. The first terminal device may notify the second terminal device at a receive end, by using the second information, of the resource used for transmitting the SL PRS, and therefore the second terminal device may receive the SL PRS on a corresponding resource, so as to accurately receive the SL PRS.

In some embodiments, the first terminal device may be a transmitting terminal device of the SL PRS, and the second terminal device may be any terminal device in a sidelink communications system. The second terminal device may determine, by parsing the first information, a resource that has been selected by the first terminal device and that is used for transmitting an SL PRS of the first terminal device, so as to select another resource for transmitting an SL PRS of the second terminal device, thereby reducing interference caused by resource overlapping between terminal devices.

In some embodiments, the first information may include an interval indicator field and/or a time domain resource allocation indicator field described above. The second information may include an interval indicator field and/or a time domain resource allocation indicator field described above. At least one of the time interval indicator field or the time domain resource allocation indicator field is used to indicate one or more slots used for transmitting the SL PRS. For example, in a case that the resource used for transmitting the SL PRS is determined through the mode 1, the first information may include the interval indicator field and the time domain resource allocation indicator field described above. Alternatively, in a case that the resource used for transmitting the SL PRS is determined through the mode 2, the second information may include the time domain resource allocation indicator field described above.

The one or more slots used for transmitting the SL PRS may include a first slot. The first information may be used to indicate a resource used for transmitting the SL PRS in the first slot. The second information may be used to indicate a resource used for transmitting the SL PRS in the first slot.

The resource used for transmitting the SL PRS in the first slot may be indicated by using an SL PRS resource or an OFDM symbol. In other words, the resource used for transmitting the SL PRS may be indicated based on a granularity of the SL PRS resource and/or a granularity of the OFDM symbol. In some embodiments, the first information may be used to indicate an SL PRS resource used for transmitting the SL PRS in the first slot. In some embodiments, the first information may be used to indicate an OFDM symbol used for transmitting the SL PRS in the first slot. In some embodiments, the second information may be used to indicate an SL PRS resource used for transmitting the SL PRS in the first slot. In some embodiments, the second information may be used to indicate an OFDM symbol used for transmitting the SL PRS in the first slot. The following separately describes the two manners.

The first slot may include one or more SL PRS resources (or abbreviated as PRS resources). For example, OFDM symbols in the first slot may be configured or preconfigured by the network device as one or more SL PRS resources. The one or more SL PRS resources may include a first SL PRS resource. The first SL PRS resource may correspond to one or more specific OFDM symbols in the first slot. The first SL PRS resource may uniquely correspond to one index.

With reference to FIG. 11 and FIG. 12, the following uses examples to describe a method for dividing SL PRS resources in the first slot.

In some embodiments, a plurality of SL PRS resources in the first slot may not overlap. In other words, each symbol in the first slot may uniquely correspond to one SL PRS resource, or different SL PRS resources occupy different OFDM symbols. As shown in FIG. 11, the first slot is configured or preconfigured by the network as four SL PRS resources, and different SL PRS resources occupy different OFDM symbols. The four SL PRSs may correspond to indexes 0, 1, 2, and 3, respectively.

In some embodiments, a plurality of SL PRS resources in the first slot may overlap. In other words, one or more symbols in the first slot may correspond to one SL PRS resource, or may correspond to a plurality of SL PRS resources. Alternatively, at least two SL PRS resources may occupy a same symbol. As shown in FIG. 12, the first slot is configured or preconfigured by the network device as five SL PRS resources. The five SL PRSs may correspond to indexes 0, 1, 2, 3, and 4, respectively. An OFDM symbol #4 to an OFDM symbol #6 may be configured as an SL PRS resource #1, an OFDM symbol #7 to an OFDM symbol #9 may be configured as an SL PRS resource #2, and the OFDM symbol #4 to the OFDM symbol #7 may be alternatively configured as an SL PRS resource #4. It may be learned that the SL PRS resource #4 overlaps other SL PRS resources.

The first information may be used to indicate M SL PRS resources used for transmitting the SL PRS in the first slot. The second information may be used to indicate M SL PRS resources used for transmitting the SL PRS in the first slot. M is an integer greater than or equal to 1.

In an implementation, in a case that a plurality of SL PRS resources in the first slot do not overlap, the first information may indicate one SL PRS resource. Similarly, in a case that a plurality of SL PRS resources in the first slot do not overlap, the second information may indicate one SL PRS resource. For example, the network device can allocate only one SL PRS resource to one terminal device, and indicate the SL PRS resource by using the first information. Alternatively, when the terminal device independently selects an SL PRS transmission resource, the terminal device can select only one SL PRS resource in the first slot, and indicate the SL PRS resource by using the second information.

It may be understood that, the first information indicates only one SL PRS resource, thereby simplifying a structure of resource indication signalling including the first information. Similarly, the second information indicates only one SL PRS resource, thereby simplifying a structure of resource indication signalling including the first information. For example, a bit length of the first information may be fixed to indicate one SL PRS resource, thereby avoiding using a complicated signalling structure caused by a change of the bit length. In addition, in a case that only one SL PRS resource is indicated, a bit length of the first information or the second information may be relatively short.

In an implementation, in a case that a plurality of SL PRS resources in the first slot do not overlap, the first information may indicate one or more SL PRS resources. Similarly, in a case that a plurality of SL PRS resources in the first slot do not overlap, the second information may indicate one or more SL PRS resources. For example, the network device may allocate one or more SL PRS resources to one terminal device, and indicate the allocated SL PRS resource by using the first information. Alternatively, when the terminal device independently selects an SL PRS transmission resource, the terminal device may select one or more SL PRS resources in the first slot, and indicate the selected SL PRS resource by using the second information.

It should be noted that in a case that the first information or the second information indicates a plurality of SL PRS resources, the plurality of SL PRS resources may be consecutive or nonconsecutive.

It may be understood that, in a case that a plurality of SL PRS resources in the first slot do not overlap, the first information or the second information may indicate not only one SL PRS resource, but also a plurality of SL PRS resources. In this way, the indication of the SL PRS resource can be more flexible.

In an implementation, in a case that a plurality of SL PRS resources in the first slot overlap, the first information may indicate only one SL PRS resource. Similarly, in a case that a plurality of SL PRS resources in the first slot overlap, the second information may indicate only one SL PRS resource. For example, the network device can allocate only one SL PRS resource to one terminal device, and indicate the SL PRS resource by using the first information. Alternatively, when the terminal device independently selects an SL PRS transmission resource, the terminal device can select only one SL PRS resource in the first slot, and indicate the SL PRS resource by using the second information.

In a case that a plurality of SL PRS resources in the first slot overlap, the first information or the second information may indicate only one SL PRS resource, thereby not only flexibly indicating the SL PRS resource, but also simplifying the structure of the resource indication signalling including the first information or the second information. For example, for the SL PRS resource division method shown in FIG. 12, the SL PRS resource #1 and the SL PRS resource #2 may be indicated by only one SL PRS resource #4, thereby implementing both flexibility and simplicity.

In some embodiments, the first information may indicate the M SL PRS resources by indicating an index of an SL PRS resource. Similarly, the second information may indicate the M SL PRS resources by indicating an index of an SL PRS resource. For example, the first information may include an index of a $1^{st}$ SL PRS resource in the M SL PRS resources and a quantity of SL PRS resources used for transmitting the SL PRS. Alternatively, the second information may include an index of a $1^{st}$ SL PRS resource in the M SL PRS resources and a quantity of SL PRS resources used for transmitting the SL PRS.

In an implementation, if the first information can indicate, to the first terminal device at a time, resources used for transmitting the SL PRS in at most S slots, R×S bits in the first information may be used to indicate indexes of SL PRS resources allocated to the first terminal device in the S slots. $R = \lceil \log_2^N \rceil$, where N is a maximum quantity of SL PRS resources configured in one slot. The R×S bits may successively correspond to the S slots, that is, a $0^{th}$ bit to a $(\lceil \log_2^N \rceil - 1)^{th}$ bit may correspond to a $1^{st}$ slot, a $\lceil \log_2^N \rceil^{th}$ bit to a $(2 \times \lceil \log_2^N \rceil - 1)^{th}$ bit may correspond to a $2^{nd}$ slot, and the like. If a quantity of slots actually indicated by the first information is less than S, the first terminal device may not interpret the corresponding bit.

In an implementation, if the second information can indicate, to the second terminal device at a time, resources used for transmitting the SL PRS in at most S slots, R×S bits in the second information may be used to indicate indexes of SL PRS resources used by the first terminal device in the S slots. $R = \lceil \log_2^N \rceil$, where N is a maximum quantity of SL PRS resources configured in one slot. The R×S bits successively correspond to the S slots, that is, a $0^{th}$ bit to a $(\lceil \log_2^N \rceil - 1)^{th}$ bit correspond to a $1^{st}$ slot, a $\lceil \log_2^N \rceil^{th}$ bit to a $(2 \times \lceil \log_2^N \rceil - 1)^{th}$ bit correspond to a $2^{nd}$ slot, and the like. If a quantity of slots actually indicated by the second information is less than S, the second terminal device may not interpret the corresponding bit.

It may be understood that, based on the foregoing technical solution, the first slot is divided into one or more time domain SL PRS resources. A resource may be allocated to a terminal device by indicating an index of a time domain SL PRS resource, thereby reducing a quantity of bits of indication signalling.

In some embodiments, the first information may be used to indicate one or more OFDM symbols used for transmitting the SL PRS in the first slot. Similarly, the second information may be used to indicate one or more OFDM symbols used for transmitting the SL PRS in the first slot. For example, a process of allocating, by the network device, a resource used for transmitting the SL PRS includes that: the network device may directly allocate one or more OFDM symbols in the first slot to the first terminal device by using the first information.

This application does not limit a method for indicating one or more OFDM symbols used for transmitting the SL PRS in the first slot. For example, the first information may be used to indicate a start symbol (a start point) of the one or more OFDM symbols and/or a symbol quantity of the one or more OFDM symbols. Alternatively, the second information may be used to indicate a start symbol of the one or more OFDM symbols and/or a symbol quantity of the one or more OFDM symbols.

It should be noted that the symbol quantity may be used to indicate a quantity of consecutive OFDM symbols used for transmitting the SL PRS in the first slot. In some embodiments, the symbol quantity may be less than or equal to a maximum symbol quantity. The maximum symbol quantity may be a positive integer. The maximum symbol quantity may be, for example, 14. That is, the symbol quantity may be an integer less than or equal to 14. In some embodiments, the symbol quantity may be greater than or equal to a minimum symbol quantity. The minimum symbol quantity may be a positive integer. The minimum symbol quantity may be, for example, 3. The maximum symbol quantity or the minimum symbol quantity may be configured or preconfigured by the network device, or may be defined by a standard.

In some implementations, if the first information may indicate, to the first terminal device, resources used for transmitting the SL PRS in at most S slots, the first information may include R×S bits. The R×S bits may be used to indicate OFDM symbols allocated to the first terminal device in the S slots. 0 to R-1 bits in the R×S bits may be used to indicate a start symbol and/or a symbol quantity of OFDM symbols allocated to the first terminal device in a 1$^{st}$ slot. R to 2R-1 bits may be used to indicate a start symbol and/or a symbol quantity of OFDM symbols allocated to the first terminal device in a 2$^{nd}$ slot, and the like.

In an implementation, the first information may directly indicate a specific value of the start symbol and/or the symbol quantity. Similarly, the second information may directly indicate a specific value of the start symbol and/or the symbol quantity. In an example in which the first slot is the 1$^{st}$ slot in the S slots, a value of 0 to R-1 bits in the first information may be equal to a start symbol and/or a symbol quantity of symbols used for transmitting the SL PRS in the first slot.

It may be understood that the first information directly indicates the start symbol and/or the symbol quantity, so that the indication of the first information can be more flexible.

It should be noted that in some embodiments, the first information or the second information may include a first indication, and the first indication may be used to indicate one of a plurality of candidate symbol quantities as the symbol quantity. The plurality of candidate symbol quantities may be configured or preconfigured by the network device, or may be defined by a standard. In addition, the plurality of candidate symbol quantities may be nonconsecutive. For example, the network device may configure or preconfigure four candidate symbol quantities. The four candidate symbol quantities may be, for example, {3, 5, 8, 10}. The first indication may indicate that the symbol quantity is a 2$^{nd}$ candidate symbol quantity in the four candidate symbol quantities, that is, 5.

In an implementation, the first information may include one or more resource indexes. Similarly, the second information may include one or more resource indexes. There is a one-to-one correspondence between the resource index and at least one of the start symbol or the symbol quantity. For example, in the first slot, the network device may configure or preconfigure N groups of optional {OFDM symbol start point (start symbol), quantity of consecutive OFDM symbols (symbol quantity)} resource combinations. Each resource combination in the N groups of resource combinations may correspond to a unique resource index. An OFDM symbol start point and a quantity of occupied OFDM symbols of the resource used for transmitting the SL PRS in the first slot may be only one of the above combinations. N may be a positive integer.

It may be understood that, a symbol used for transmitting the SL PRS is indicated by using a resource index, so that a quantity of bits of the first information or the second information can be reduced, thereby simplifying indication signalling of the resource used for transmitting the SL PRS.

The first information or the second information may be further used to indicate a slot interval of the resource used for transmitting the SL PRS. The slot interval may be used to indicate a time interval between slots used for transmitting the SL PRS. The slot interval may also be used to indicate a time interval between a slot in which the first information or the second information is located and a slot used for transmitting the SL PRS. For example, the first information may indicate a plurality of slot intervals. A 1$^{st}$ slot gap may be based on the slot in which the first information is located (for example, a slot of DCI including the first information), that is, a time interval between a 1$^{st}$ slot that is indicated by the first information and that is used for transmitting the SL PRS and the slot in which the first information is located may be the 1$^{st}$ slot interval. A slot interval other than the 1$^{st}$ slot interval may be based on a previous slot used for transmitting the SL PRS. Taking a 2$^{nd}$ slot interval as an example, a time interval between a 2$^{nd}$ slot that is indicated by the first information and that is used for transmitting the SL PRS and the 1$^{st}$ slot may be the 2$^{nd}$ slot gap.

There is a one-to-one correspondence between the resource index and the slot interval. The following uses an example in which the resource index uniquely corresponds to the slot gap, the start symbol, and the symbol quantity for description. In the first slot, the network device may configure or preconfigure L groups of optional {slot gap, OFDM symbol start point (start symbol), quantity of consecutive OFDM symbols (symbol quantity)} resource combinations. Each resource combination in the L groups of resource combinations may correspond to a unique resource index. A slot interval of the resource used for transmitting the SL PRS, an OFDM symbol start point in the first slot, and a quantity of occupied OFDM symbols in the first slot may be only one of the above combinations. L may be a positive integer.

It should be noted that the first information may include one or more resource indexes to indicate one or more SL PRS transmission resources. Similarly, the second information may include one or more resource indexes to indicate one or more SL PRS transmission resources. For example, a plurality of resource indexes may be in a one-to-one correspondence with a plurality of SL PRS transmission resources.

A slot interval, a start symbol, and a symbol quantity are indicated by using a resource index, so that information fields indicating the slot interval, the start symbol, and the symbol quantity can be reduced, thereby simplifying indication signalling.

It should be noted that, the resource used for transmitting the SL PRS being indicated based on the granularity of the SL PRS resource may be applicable to the resource allocation mode 1 or the resource allocation mode 2. The resource used for transmitting the SL PRS being indicated based on the granularity of the symbol may be applicable only to the resource allocation mode 1.

It may be understood that, regardless of whether the resource used for transmitting the SL PRS is indicated based on the granularity of the SL PRS resource or the granularity of the OFDM symbol, a finer resource allocation granularity can be implemented relative to a slot granularity, thereby improving a capacity of a sidelink positioning system, reducing interference between users in the system, and thus improving positioning accuracy.

It should be noted that the first terminal device may transmit the second information by using PC5 higher layer signalling and/or SCI. For example, the first terminal device may transmit the SL PRS and/or the second information in the following two manners. Manner 1: The first terminal device may indicate SL PRS transmission by using the SCI. Manner 2: The first terminal device may indicate SL PRS transmission by using the PC5 higher layer signalling.

A manner used by the first terminal device to indicate SL PRS transmission may be defined by a standard, or may be configured or preconfigured by the network device. For example, the first terminal device may indicate SL PRS transmission by using only manner 1. Alternatively, the first terminal device may indicate SL PRS transmission by using manner 1 in the following cases: the network device dynamically allocates a resource, and the terminal device independently selects a resource; and indicate SL PRS transmission by using manner 2 in the following case: the network device allocates a resource through a configured grant.

Manner 1 and manner 2 provided in this application are described in detail in the following.

## Manner 1

In manner 1, the SCI used to indicate SL PRS transmission may be first-order SCI and/or second-order SCI. The SCI and the indicated SL PRS may be transmitted in a same slot or different slots. When the SCI and the SL PRS are transmitted in a same slot, a physical channel used for carrying the SCI and an SL PRS indicated by the SCI may be transmitted in a same OFDM symbol and/or different OFDM symbols. The physical channel used for carrying the SCI may include a PSCCH and/or a PSSCH.

In some embodiments, there may be a unique correspondence between a resource of the physical channel used for carrying the SCI and a resource indicated by the SCI for transmitting the SL PRS, and the correspondence may be referred to as a first relationship. In other words, the first terminal device may uniquely determine, based on the resource used for transmitting the SL PRS, the resource used to indicate the physical channel on which the SCI of the SL PRS is located. The first relationship may be configured or preconfigured by the network, or may be defined by a standard.

In an implementation, the PSCCH used for carrying the SCI and the SL PRS may occupy adjacent OFDM symbols in the first slot. As shown in FIG. 13, the PSCCH occupies one OFDM symbol and the SL PRS occupies an adjacent OFDM symbol.

In an implementation, the PSCCH used for carrying the SCI may be frequency-division or time-division multiplexed with the SL PRS in the first slot. The PSCCH may occupy only one or more OFDM symbols. A quantity and a bandwidth of OFDM symbols occupied by the PSCCH may be configured or preconfigured by the network device, or may be defined by a standard. As shown in FIG. 14, a bandwidth of an SL PRS indicated by the PSCCH may be not less than a bandwidth of the PSCCH. If the bandwidth of the SL PRS is greater than the bandwidth of the PSCCH, the SL PRS may be transmitted on an OFDM symbol in which the PSCCH is located.

It should be noted that the above two types of correspondence between the PSCCH and the indicated SL PRS are irrelevant to the resource allocation manner adopted by the first terminal device, and are applicable in both the resource allocation mode 1 and the resource allocation mode 2.

In consideration of the foregoing first relationship, based on a resource that is indicated by the second information and that is used for transmitting the SL PRS, the corresponding resource of the physical channel on which the SCI is located may be determined. In an implementation, the resource that is indicated by the second information and that is used for transmitting the SL PRS may be further used to indicate the resource of the physical channel on which the SCI is located. For example, in a case that the second information is included in the SCI, the SCI is carried on a PSCCH, and the resource used for transmitting the SL PRS may be further used to transmit the PSCCH. It may be learned from this that, in some embodiments, the resource used to indicate the physical channel on which the SCI of the SL PRS is located may not be additionally indicated.

**Manner 2**

In manner 2, the first terminal device may indicate the second information by using higher layer signalling. In other words, the second terminal device (a receiving terminal device of the SL PRS) may receive the SL PRS by receiving the foregoing higher layer signalling. The second information may be included in SL PRS transmission information. In other words, the SL PRS transmission information is used to indicate a resource used for transmitting the SL PRS and an SL PRS transmission manner. The SL PRS transmission manner may include information such as a sequence ID of the SL PRS and an RE occupied by the SL PRS required by the second terminal device to receive the SL PRS. The higher layer signalling may be PC5 higher layer signalling. The PC5 higher layer signalling may include, for example, MAC layer or RRC layer signalling. For example, if the first terminal device (a transmitting terminal device of the SL PRS) has a configured grant provided by the network, the first terminal device may transmit the configured grant and the SL PRS transmission manner to the receiving terminal of the SL PRS by using higher layer signalling. The second terminal device may receive the SL PRS based on the foregoing information.

In manner 2, the second information may indicate only the resource used for transmitting the SL PRS. For example, a process of allocating a resource to the first terminal device by the network device may include that: the network device allocate, to the first terminal device, only the resource used for transmitting the SL PRS, without allocating a resource used to indicate a physical channel for SL PRS transmission.

In some embodiments, in a case that the SL PRS is periodically transmitted, the second information may be included in PC5 higher layer signalling. In other words, in a case that the SL PRS is periodically transmitted, the second information may be transmitted in manner 2. Alternatively, for a periodic SL PRS, the first terminal device may not transmit SCI to indicate SL PRS transmission, but indicate SL PRS transmission by using PC5 higher layer signalling.

It should be noted that if the resource used for transmitting the SL PRS is allocated by the network device, a transmission bandwidth of the SL PRS may be indicated by DCI, or a transmission bandwidth of the SL PRS may be configured or preconfigured by the network device.

It should be noted that when the network device allocates, to the first terminal device by using DCI, the resource used for transmitting the SL PRS, CRC that carries the DCI may be scrambled by an RNTI separately configured by the network device. The first terminal device may descramble a received PDCCH by using the RNTI, to obtain the DCI.

The foregoing describes in detail the method embodiments of this application with reference to FIG. 1 to FIG. 14. The following describes in detail apparatus embodiments of this application with reference to FIG. 15 to FIG. 19. It should be understood that the description of the method embodiments corresponds to the description of the apparatus embodiments, and therefore, for parts that are not described in detail, one may refer to the foregoing method embodiments.

FIG. 15 is a schematic structural diagram of a terminal device 1500 according to an embodiment of this application. The terminal device 1500 is a first terminal device. The terminal device 1500 may include a first receiving unit 1510.

The first receiving unit 1510 is configured to receive first information transmitted by a network device, where the first information is used to indicate a resource used for transmitting an SL PRS.

In some embodiments, the first information is used to indicate M SL PRS resources used for transmitting the SL PRS in a first slot, the first slot includes one or more SL PRS resources, and the SL PRS resource includes one or more orthogonal frequency division multiplexing OFDM symbols, where M is an integer greater than or equal to 1.

In some embodiments, the first information includes an index of a $1^{st}$ SL PRS resource in the M SL PRS resources and a quantity of SL PRS resources used for transmitting the SL PRS.

In some embodiments, in a case that a plurality of SL PRS resources included in the first slot overlap, the first information is used to indicate one SL PRS resource used for transmitting the SL PRS in the first slot.

In some embodiments, the first information is used to indicate one or more OFDM symbols used for transmitting the SL PRS in a first slot.

In some embodiments, the first information is used to indicate a start symbol of the one or more OFDM symbols and/or a symbol quantity of the one or more OFDM symbols.

In some embodiments, the first information includes a resource index, and there is a one-to-one correspondence between the resource index and at least one of the start symbol or the symbol quantity.

In some embodiments, the first information includes a first indication, and the first indication is used to indicate one of a plurality of candidate symbol quantities as the symbol quantity.

In some embodiments, the first information is further used to indicate a slot interval of the resource used for transmitting the SL PRS.

In some embodiments, the first information includes a resource index, and there is a one-to-one correspondence between the resource index and the slot interval.

In some embodiments, the first information is included in one or more of the following: DCI or RRC layer signalling.

In some embodiments, the first information includes a time interval indicator field and/or a time domain resource allocation indicator field, and at least one of the time interval indicator field or the time domain resource allocation indicator field is used to indicate a slot used for transmitting the SL PRS.

FIG. 16 is a schematic structural diagram of a terminal device 1600 according to an embodiment of this application. The terminal device 1600 is a first terminal device. The terminal device 1600 may include a first transmitting unit 1610.

The first transmitting unit 1610 is configured to transmit second information to a second terminal device, where the second information is used to indicate a resource used for transmitting an SL PRS.

In some embodiments, the second information is used to indicate M SL PRS resources used for transmitting the SL PRS in a first slot, the first slot includes one or more SL PRS resources, and the SL PRS resource includes one or more OFDM symbols, where M is an integer greater than or equal to 1.

In some embodiments, the second information includes an index of a $1^{st}$ SL PRS resource in the M SL PRS resources and a quantity of SL PRS resources used for transmitting the SL PRS.

In some embodiments, in a case that a plurality of SL PRS resources included in the first slot overlap, the second information is used to indicate one SL PRS resource used for transmitting the SL PRS in the first slot.

In some embodiments, the second information is used to indicate one or more OFDM symbols used for transmitting the SL PRS in a first slot.

In some embodiments, the second information is used to indicate a start symbol of the one or more OFDM symbols and/or a symbol quantity of the one or more OFDM symbols.

In some embodiments, the second information includes a resource index, and there is a one-to-one correspondence between the resource index and at least one of the start symbol or the symbol quantity.

In some embodiments, the second information includes a first indication, and the first indication is used to indicate one of a plurality of candidate symbol quantities as the symbol quantity.

In some embodiments, the second information is further used to indicate a slot interval of the resource used for transmitting the SL PRS.

In some embodiments, the second information includes a resource index, and there is a one-to-one correspondence between the resource index and the slot interval.

In some embodiments, the second information is included in one or more of the following: PC5 higher layer signalling or sidelink control information SCI.

In some embodiments, in a case that the SL PRS is periodically transmitted, the second information is included in the PC5 higher layer signalling.

In some embodiments, in a case that the second information is included in the SCI, the SCI is carried on a PSCCH, and the resource used for transmitting the SL PRS is further used to transmit the PSCCH.

In some embodiments, the second information includes a time interval indicator field and/or a time domain resource allocation indicator field, and at least one of the time interval indicator field or the time domain resource allocation indicator field is used to indicate a slot used for transmitting the SL PRS.

In some embodiments, the resource used for transmitting the SL PRS is selected independently by the first terminal device, or is obtained by receiving DCI and/or RRC layer signalling transmitted by a network device.

FIG. 17 is a schematic structural diagram of a network device 1700 according to an embodiment of this application. The network device 1700 includes a second transmitting unit 1710.

The second transmitting unit 1710 is configured to transmit first information to a first terminal device, where the first information is used to indicate a resource used for transmitting a sidelink positioning reference signal SL PRS.

In some embodiments, the first information is used to indicate M SL PRS resources used for transmitting the SL PRS in a first slot, the first slot includes one or more SL PRS resources, and the SL PRS resource includes one or more orthogonal frequency division multiplexing OFDM symbols, where M is an integer greater than or equal to 1.

In some embodiments, the first information includes an index of a $1^{st}$ SL PRS resource in the M SL PRS resources and a quantity of SL PRS resources used for transmitting the SL PRS.

In some embodiments, in a case that a plurality of SL PRS resources included in the first slot overlap, the first information is used to indicate one SL PRS resource used for transmitting the SL PRS in the first slot.

In some embodiments, the first information is used to indicate one or more OFDM symbols used for transmitting the SL PRS in a first slot.

In some embodiments, the first information is used to indicate a start symbol of the one or more OFDM symbols and/or a symbol quantity of the one or more OFDM symbols.

In some embodiments, the first information includes a resource index, and there is a one-to-one correspondence between the resource index and at least one of the start symbol or the symbol quantity.

In some embodiments, the first information includes a first indication, and the first indication is used to indicate one of a plurality of candidate symbol quantities as the symbol quantity.

In some embodiments, the first information is further used to indicate a slot interval of the resource used for transmitting the SL PRS.

In some embodiments, the first information includes a resource index, and there is a one-to-one correspondence between the resource index and the slot interval.

In some embodiments, the first information includes a time interval indicator field and/or a time domain resource allocation indicator field, and at least one of the time interval indicator field or the time domain resource allocation indicator field is used to indicate a slot used for transmitting the SL PRS.

In some embodiments, the first information is included in one or more of the following: downlink control information DCI or radio resource control RRC layer signalling.

FIG. 18 is a schematic structural diagram of a terminal device 1800 according to an embodiment of this application. The terminal device 1800 may be a second terminal device. The terminal device 1800 includes a second receiving unit 1810.

The second receiving unit 1810 is configured to receive second information transmitted by a first terminal device, where the second information is used to indicate a resource used for transmitting an SL PRS.

In some embodiments, the second information is used to indicate M SL PRS resources used for transmitting the SL PRS in a first slot, the first slot includes one or more SL PRS resources, and the SL PRS resource includes one or more OFDM symbols, where M is an integer greater than or equal to 1.

In some embodiments, the second information includes an index of a $1^{st}$ SL PRS resource in the M SL PRS resources and a quantity of SL PRS resources used for transmitting the SL PRS.

In some embodiments, in a case that a plurality of SL PRS resources included in the first slot overlap, the second information is used to indicate one SL PRS resource used for transmitting the SL PRS in the first slot.

In some embodiments, the second information is used to indicate one or more OFDM symbols used for transmitting the SL PRS in a first slot.

In some embodiments, the second information is used to indicate a start symbol of the one or more OFDM symbols and/or a symbol quantity of the one or more OFDM symbols.

In some embodiments, the second information includes a resource index, and there is a one-to-one correspondence between the resource index and at least one of the start symbol or the symbol quantity.

In some embodiments, the second information includes a first indication, and the first indication is used to indicate one of a plurality of candidate symbol quantities as the symbol quantity.

In some embodiments, the second information is further used to indicate a slot interval of the resource used for transmitting the SL PRS.

In some embodiments, the second information includes a resource index, and there is a one-to-one correspondence between the resource index and to the slot interval.

In some embodiments, the second information is included in one or more of the following: PC5 higher layer signalling or sidelink control information SCI.

In some embodiments, in a case that the SL PRS is periodically transmitted, the second information is included in the PC5 higher layer signalling.

In some embodiments, in a case that the second information is included in the SCI, the SCI is carried on a PSCCH, and the resource used for transmitting the SL PRS is further used to transmit the PSCCH.

In some embodiments, the second information includes a time interval indicator field and/or a time domain resource allocation indicator field, and at least one of the time interval indicator field or the time domain resource allocation indicator field is used to indicate a slot used for transmitting the SL PRS.

In some embodiments, the resource used for transmitting the SL PRS is selected independently by the first terminal device, or is obtained by receiving DCI and/or RRC layer signalling transmitted by a network device.

In an optional embodiment, each of the receiving unit 1510, the first transmitting unit 1610, and the second transmitting unit 1710 may be a transceiver 1830. Specifically, as shown in FIG. 18, the terminal device 1500, the terminal device 1600, and the network device 1700 may further include a memory 1820 and/or a processor 1810.

FIG. 19 is a schematic structural diagram of a communication apparatus according to an embodiment of this application. Dashed lines in FIG. 19 indicate that the unit or module is optional. The apparatus 1900 may be configured to implement the methods described in the foregoing method embodiments. The apparatus 1900 may be a chip, a terminal device, or a network device.

The apparatus 1900 may include one or more processors 1910. The processor 1910 may support the apparatus 1900 in implementing the methods described in the foregoing method embodiments. The processor 1910 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1900 may further include one or more memories 1920. The memory 1920 stores a program. The program may be executed by the processor 1910, to cause the processor 1910 to execute the methods described in the foregoing method embodiments. The memory 1920 may be separate from the processor 1910 or may be integrated into the processor 1910.

The apparatus 1900 may further include a transceiver 1930. The processor 1910 may communicate with another device or chip by using the transceiver 1930. For example, the processor 1910 may transmit data to and receive data from another device or chip by using the transceiver 1930.

An embodiment of this application further provides a computer-readable storage medium, configured to store a program. The computer-readable storage medium may be applied to a terminal or a network device provided in embodiments of this application, and the program causes a computer to execute the methods to be executed by the terminal or the network device in embodiments of this application.

An embodiment of this application further provides a computer program product. The computer program product includes a program. The computer program product may be applied to a terminal or a network device provided in embodiments of this application, and the program causes a computer to execute the methods to be executed by the terminal or the network device in embodiments of this application.

An embodiment of this application further provides a computer program. The computer program may be applied to a terminal or a network device provided in embodiments of this application, and the computer program causes a computer to execute the methods to be executed by the terminal or the network device in embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefined" or "preconfigured" may be implemented by prestoring corresponding code or a corresponding table in a device (for example, including a terminal device and a network device) or in other manners that can be used for indicating related information, and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" herein generally indicates an "or" relationship between associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

**1.** A communication method, comprising:

receiving, by a first terminal device, first information transmitted by a network device,
wherein the first information is used to indicate a resource used for transmitting a sidelink positioning reference signal SL PRS.

**2.** The method according to claim 1, wherein the first information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**3.** The method according to claim 2, wherein the first information comprises an index of a $1^{st}$ SL PRS resource in the M SL PRS resources and a quantity of SL PRS resources used for transmitting the SL PRS.

**4.** The method according to claim 2 or 3, wherein in a case that a plurality of SL PRS resources comprised in the first slot overlap, the first information is used to indicate one SL PRS resource used for transmitting the SL PRS in the first slot.

**5.** The method according to claim 1, wherein the first information is used to indicate one or more OFDM symbols used for transmitting the SL PRS in a first slot.

**6.** The method according to claim 5, wherein the first information is used to indicate a start symbol of the one or more OFDM symbols and/or a symbol quantity of the one or more OFDM symbols.

**7.** The method according to claim 6, wherein the first information comprises a resource index, and there is a one-to-one correspondence between the resource index and at least one of the start symbol or the symbol quantity.

**8.** The method according to claim 6, wherein the first information comprises a first indication, and the first indication is used to indicate one of a plurality of candidate symbol quantities as the symbol quantity.

**9.** The method according to any one of claims 6 to 8, wherein the first information is further used to indicate a slot interval of the resource used for transmitting the SL PRS.

**10.** The method according to claim 9, wherein the first information comprises a resource index, and there is a one-to-one correspondence between the resource index and the slot interval.

**11.** The method according to any one of claims 1 to 10, wherein the first information is comprised in one or more of following: downlink control information DCI or radio resource control RRC layer signalling.

**12.** The method according to any one of claims 1 to 11, wherein the first information comprises a time interval indicator field and/or a time domain resource allocation indicator field, and at least one of the time interval indicator field or the time domain resource allocation indicator field is used to indicate a slot used for transmitting the SL PRS.

**13.** A communication method, comprising:

transmitting, by a first terminal device, second information to a second terminal device,
wherein the second information is used to indicate a resource used for transmitting a sidelink positioning reference signal SL PRS.

**14.** The method according to claim 13, wherein the second information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**15.** The method according to claim 14, wherein the second information comprises an index of a $1^{st}$ SL PRS resource in the M SL PRS resources and a quantity of SL PRS resources used for transmitting the SL PRS.

**16.** The method according to claim 14 or 15, wherein in a case that a plurality of SL PRS resources comprised in the first slot overlap, the second information is used to indicate one SL PRS resource used for transmitting the SL PRS in the first slot.

**17.** The method according to claim 13, wherein the second information is used to indicate one or more OFDM symbols used for transmitting the SL PRS in a first slot.

**18.** The method according to claim 17, wherein the second information is used to indicate a start symbol of the one or more OFDM symbols and/or a symbol quantity of the one or more OFDM symbols.

**19.** The method according to claim 18, wherein the second information comprises a resource index, and there is a one-to-one correspondence between the resource index and at least one of the start symbol or the symbol quantity.

**20.** The method according to claim 18, wherein the second information comprises a first indication, and the first indication is used to indicate one of a plurality of candidate symbol quantities as the symbol quantity.

**21.** The method according to any one of claims 18 to 20, wherein the second information is further used to indicate a slot interval of the resource used for transmitting the SL PRS.

**22.** The method according to claim 21, wherein the second information comprises a resource index, and there is a one-to-one correspondence between the resource index and the slot interval.

**23.** The method according to any one of claims 13 to 22, wherein the second information is comprised in one or more of following: PC5 higher layer signalling or sidelink control information SCI.

**24.** The method according to claim 23, wherein in a case that the SL PRS is periodically transmitted, the second information is comprised in the PC5 higher layer signalling.

**25.** The method according to claim 23, wherein in a case that the second information is comprised in the SCI, the SCI is carried on a physical sidelink control channel PSCCH, and the resource used for transmitting the SL PRS is further used to transmit the PSCCH.

**26.** The method according to any one of claims 13 to 25, wherein the second information comprises a time interval indicator field and/or a time domain resource allocation indicator field, and at least one of the time interval indicator field or the time domain resource allocation indicator field is used to indicate a slot used for transmitting the SL PRS.

**27.** The method according to any one of claims 13 to 26, wherein the resource used for transmitting the SL PRS is independently selected by the first terminal device, or is obtained by receiving DCI and/or RRC layer signalling transmitted by a network device.

**28.** A communication method, comprising:

transmitting, by a network device, first information to a first terminal device,
wherein the first information is used to indicate a resource used for transmitting a sidelink positioning reference signal SL PRS.

**29.** The method according to claim 28, wherein the first information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**30.** The method according to claim 29, wherein the first information comprises an index of a $1^{st}$ SL PRS resource in the M SL PRS resources and a quantity of SL PRS resources used for transmitting the SL PRS.

**31.** The method according to claim 29 or 30, wherein in a case that a plurality of SL PRS resources comprised in the first slot overlap, the first information is used to indicate one SL PRS resource used for transmitting the SL PRS in the first slot.

**32.** The method according to claim 28, wherein the first information is used to indicate one or more OFDM symbols used for transmitting the SL PRS in a first slot.

**33.** The method according to claim 32, wherein the first information is used to indicate a start symbol of the one or more OFDM symbols and/or a symbol quantity of the one or more OFDM symbols.

**34.** The method according to claim 33, wherein the first information comprises a resource index, and there is a non-to-one correspondence between the resource index and at least one of the start symbol or the symbol quantity.

**35.** The method according to claim 33, wherein the first information comprises a first indication, and the first indication is used to indicate one of a plurality of candidate symbol quantities as the symbol quantity.

**36.** The method according to any one of claims 33 to 35, wherein the first information is further used to indicate a slot interval of the resource used for transmitting the SL PRS.

**37.** The method according to claim 36, wherein the first information comprises a resource index, and there is a one-to-one correspondence between the resource index and the slot interval.

**38.** The method according to any one of claims 28 to 37, wherein the first information comprises a time interval indicator field and/or a time domain resource allocation indicator field, and at least one of the time interval indicator field or the time domain resource allocation indicator field is used to indicate a slot used for transmitting the SL PRS.

**39.** The method according to any one of claims 28 to 38, wherein the first information is comprised in one or more of following: downlink control information DCI or radio resource control RRC layer signalling.

**40.** A communication method, comprising:

receiving, by a second terminal device, second information transmitted by a first terminal device,
wherein the second information is used to indicate a resource used for transmitting a sidelink positioning reference signal SL PRS.

**41.** A terminal device, wherein the terminal device is a first terminal device, and the terminal device comprises:

a receiving unit, configured to receive first information transmitted by a network device,
wherein the first information is used to indicate a resource used for transmitting a sidelink positioning reference signal SL PRS.

**42.** The terminal device according to claim 41, wherein the first information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**43.** The terminal device according to claim 42, wherein the first information comprises an index of a 1$^{st}$ SL PRS resource in the M SL PRS resources and a quantity of SL PRS resources used for transmitting the SL PRS.

**44.** The terminal device according to claim 42 or 43, wherein in a case that a plurality of SL PRS resources comprised in the first slot overlap, the first information is used to indicate one SL PRS resource used for transmitting the SL PRS in the first slot.

**45.** The terminal device according to claim 41, wherein the first information is used to indicate one or more OFDM symbols used for transmitting the SL PRS in a first slot.

**46.** The terminal device according to claim 45, wherein the first information is used to indicate a start symbol of the one or more OFDM symbols and/or a symbol quantity of the one or more OFDM symbols.

**47.** The terminal device according to claim 46, wherein the first information comprises a resource index, and there is a one-to-one correspondence between the resource index and at least one of the start symbol or the symbol quantity.

**48.** The terminal device according to claim 46, wherein the first information comprises a first indication, and the first indication is used to indicate one of a plurality of candidate symbol quantities as the symbol quantity.

**49.** The terminal device according to any one of claims 46 to 48, wherein the first information is further used to indicate a slot interval of the resource used for transmitting the SL PRS.

**50.** The terminal device according to claim 49, wherein the first information comprises a resource index, and there is a one-to-one correspondence between the resource index and the slot interval.

**51.** The terminal device according to any one of claims 41 to 50, wherein the first information is comprised in one or more of following: downlink control information DCI or radio resource control RRC layer signalling.

**52.** The terminal device according to any one of claims 41 to 51, wherein the first information comprises a time interval indicator field and/or a time domain resource allocation indicator field, and at least one of the time interval indicator field or the time domain resource allocation indicator field is used to indicate a slot used for transmitting the SL PRS.

**53.** A terminal device, wherein the terminal device is a first terminal device, and the terminal device comprises:

a first transmitting unit, configured to transmit second information to a second terminal device,
wherein the second information is used to indicate a resource used for transmitting a sidelink positioning reference signal SL PRS.

**54.** The terminal device according to claim 53, wherein the second information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**55.** The terminal device according to claim 54, wherein the second information comprises an index of a 1$^{st}$ SL PRS resource in the M SL PRS resources and a quantity of SL PRS resources used for transmitting the SL PRS.

**56.** The terminal device according to claim 54 or 55, wherein in a case that a plurality of SL PRS resources comprised in the first slot overlap, the second information is used to indicate one SL PRS resource used for transmitting the SL PRS in the first slot.

**57.** The terminal device according to claim 53, wherein the second information is used to indicate one or more OFDM symbols used for transmitting the SL PRS in a first slot.

**58.** The terminal device according to claim 57, wherein the second information is used to indicate a start symbol of the one or more OFDM symbols and/or a symbol quantity of the one or more OFDM symbols.

**59.** The terminal device according to claim 58, wherein the second information comprises a resource index, and there is a one-to-one correspondence between the resource index and at least one of the start symbol or the symbol quantity.

**60.** The terminal device according to claim 58, wherein the second information comprises a first indication, and the first indication is used to indicate one of a plurality of candidate symbol quantities as the symbol quantity.

**61.** The terminal device according to any one of claims 58 to 60, wherein the second information is further used to indicate a slot interval of the resource used for transmitting the SL PRS.

**62.** The terminal device according to claim 61, wherein the second information comprises a resource index, and there is a one-to-one correspondence between the resource index and the slot interval.

**63.** The terminal device according to any one of claims 53 to 62, wherein the second information is comprised in one or more of following: PC5 higher layer signalling or sidelink control information SCI.

**64.** The terminal device according to claim 63, wherein in a case that the SL PRS is periodically transmitted, the second information is comprised in the PC5 higher layer signalling.

**65.** The terminal device according to claim 63, wherein in a case that the second information is comprised in the SCI, the SCI is carried on a physical sidelink control channel PSCCH, and the resource used for transmitting the SL PRS is further used to transmit the PSCCH.

**66.** The terminal device according to any one of claims 53 to 65, wherein the second information comprises a time interval indicator field and/or a time domain resource allocation indicator field, and at least one of the time interval indicator field or the time domain resource allocation indicator field is used to indicate a slot used for transmitting the SL PRS.

**67.** The terminal device according to any one of claims 53 to 66, wherein the resource used for transmitting the SL PRS is selected independently by the first terminal device, or is obtained by receiving DCI and/or RRC layer signalling transmitted by a network device.

**68.** A network device, comprising:

a second transmitting unit, configured to transmit first information to a first terminal device,
wherein the first information is used to indicate a resource used for transmitting a sidelink positioning reference signal SL PRS.

**69.** The network device according to claim 68, wherein the first information is used to indicate M SL PRS resources used for transmitting the SL PRS in a first slot, the first slot comprises one or more SL PRS resources, and the SL PRS resource comprises one or more orthogonal frequency division multiplexing OFDM symbols, wherein M is an integer greater than or equal to 1.

**70.** The network device according to claim 69, wherein the first information comprises an index of a $1^{st}$ SL PRS resource in the M SL PRS resources and a quantity of SL PRS resources used for transmitting the SL PRS.

**71.** The network device according to claim 69 or 70, wherein in a case that a plurality of SL PRS resources comprised in the first slot overlap, the first information is used to indicate one SL PRS resource used for transmitting the SL PRS in the first slot.

**72.** The network device according to claim 68, wherein the first information is used to indicate one or more OFDM symbols used for transmitting the SL PRS in a first slot.

**73.** The network device according to claim 72, wherein the first information is used to indicate a start symbol of the one or more OFDM symbols and/or a symbol quantity of the one or more OFDM symbols.

**74.** The network device according to claim 73, wherein the first information comprises a resource index, and there is a one-to-one correspondence between the resource index and at least one the start symbol or the symbol quantity.

**75.** The network device according to claim 73, wherein the first information comprises a first indication, and the first indication is used to indicate one of a plurality of candidate symbol quantities as the symbol quantity.

**76.** The network device according to any one of claims 73 to 75, wherein the first information is further used to indicate a slot interval of the resource used for transmitting the SL PRS.

**77.** The network device according to claim 76, wherein the first information comprises a resource index, and there is a one-to-one correspondence between the resource index and the slot interval.

**78.** The network device according to any one of claims 68 to 77, wherein the first information comprises a time interval indicator field and/or a time domain resource allocation indicator field, and at least one of the time interval indicator field or the time domain resource allocation indicator field is used to indicate a slot used for transmitting the SL PRS.

**79.** The network device according to any one of claims 68 to 78, wherein the first information is comprised in one or more of following: downlink control information DCI or radio resource control RRC layer signalling.

**80.** A terminal device, wherein the terminal device is a second terminal device, and the terminal device comprises:

a second receiving unit, configured to receive second information transmitted by a first terminal device, wherein the second information is used to indicate a resource used for transmitting a sidelink positioning reference signal SL PRS.

**81.** A terminal device, comprising a memory and a processor, wherein the memory is configured to store a program, and the processor is configured to invoke the program in the memory to cause the terminal device to execute the method according to any one of claims 1 to 27 and claim 40.

**82.** A network device, comprising a memory and a processor, wherein the memory is configured to store a program, and the processor is configured to invoke the program in the memory to cause the network device to execute the method according to any one of claims 28 to 39.

**83.** An apparatus, comprising a processor, configured to invoke a program from a memory to cause the apparatus to execute the method according to any one of claims 1 to 40.

**84.** A chip, comprising a processor, configured to invoke a program from a memory to cause a device installed with the chip to execute the method according to any one of claims 1 to 40.

**85.** A computer-readable storage medium, wherein the computer-readable storage medium stores a program, and the program causes a computer to execute the method according to any one of claims 1 to 40.

**86.** A computer program product, comprising a program, wherein the program causes a computer to execute the method according to any one of claims 1 to 40.

**87.** A computer program, wherein the computer program causes a computer to execute the method according to any one of claims 1 to 40.

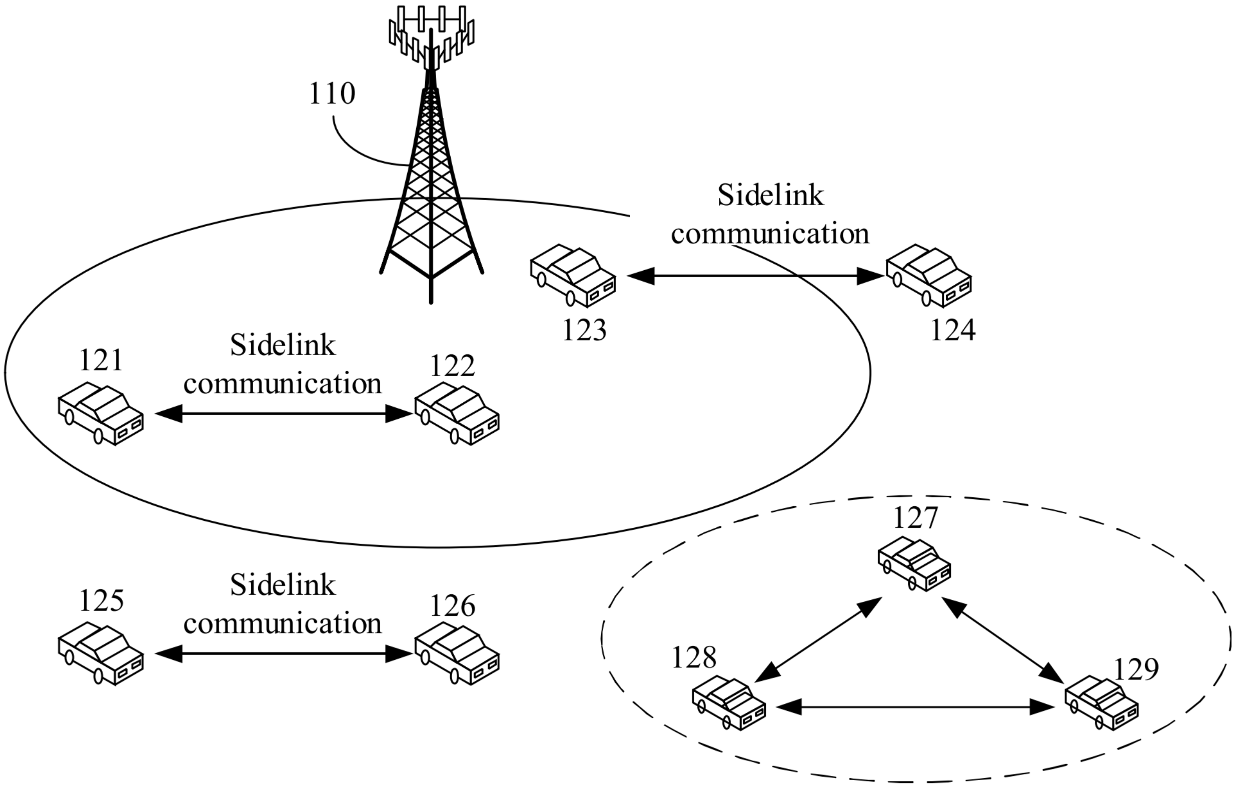
110
Sidelink
communication
123
124
121
Sidelink
communication
122
127
125
Sidelink
communication
126
128
129

FIG. 1

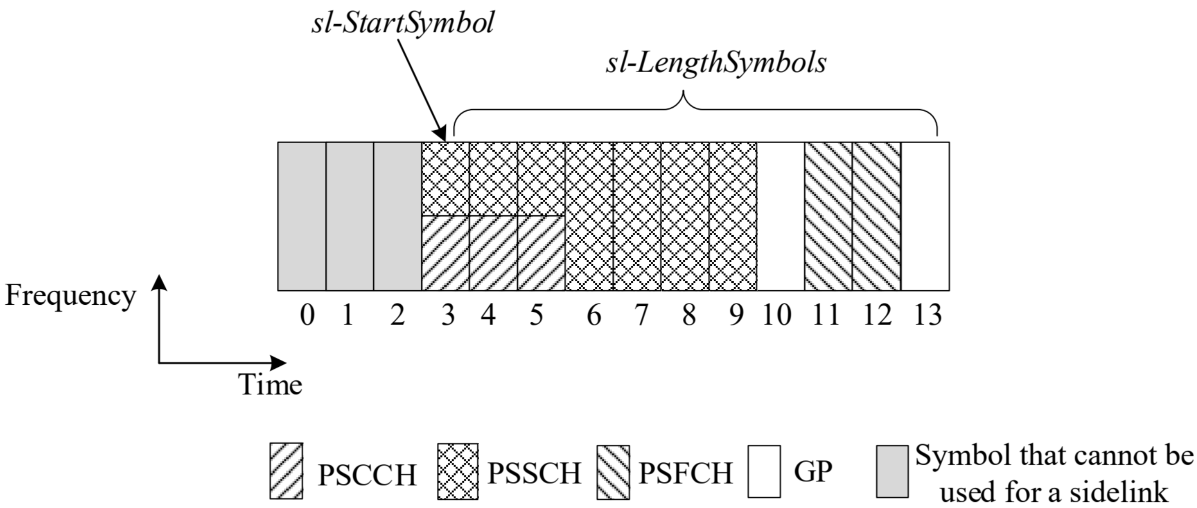


FIG. 2

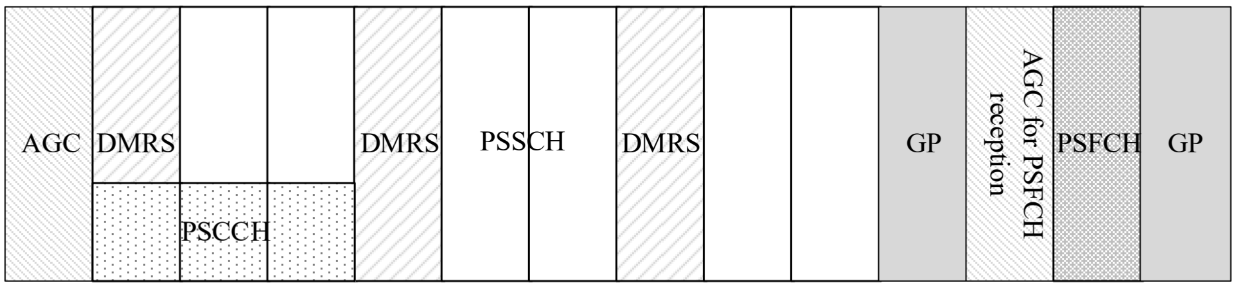


FIG. 3

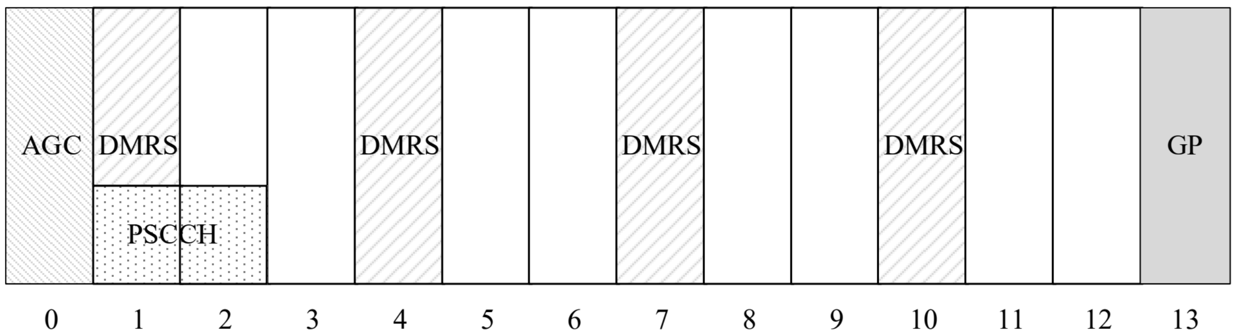


FIG. 4

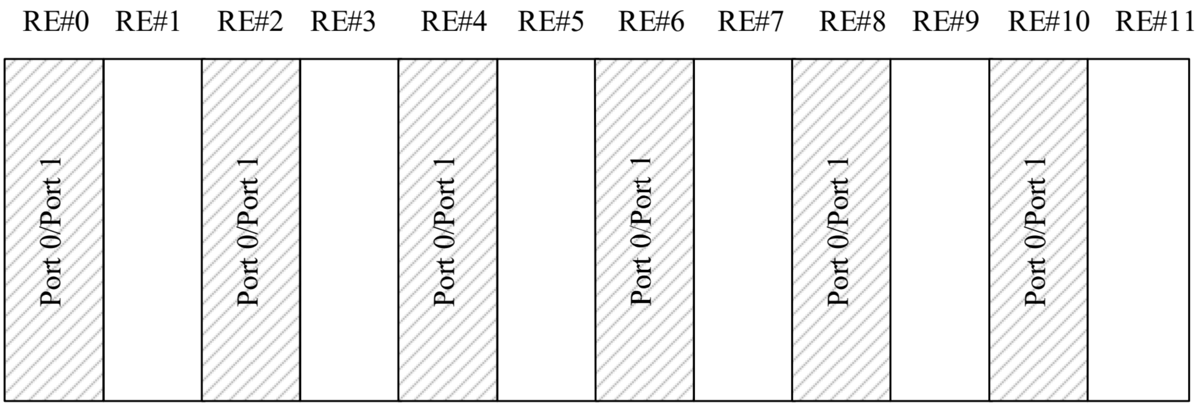
RE#0
RE#1
RE#2
RE#3
RE#4
RE#5
RE#6
RE#7
RE#8
RE#9
RE#10
RE#11
Port 0/Port 1
Port 0/Port 1
Port 0/Port 1
Port 0/Port 1
Port 0/Port 1
Port 0/Port 1

FIG. 5

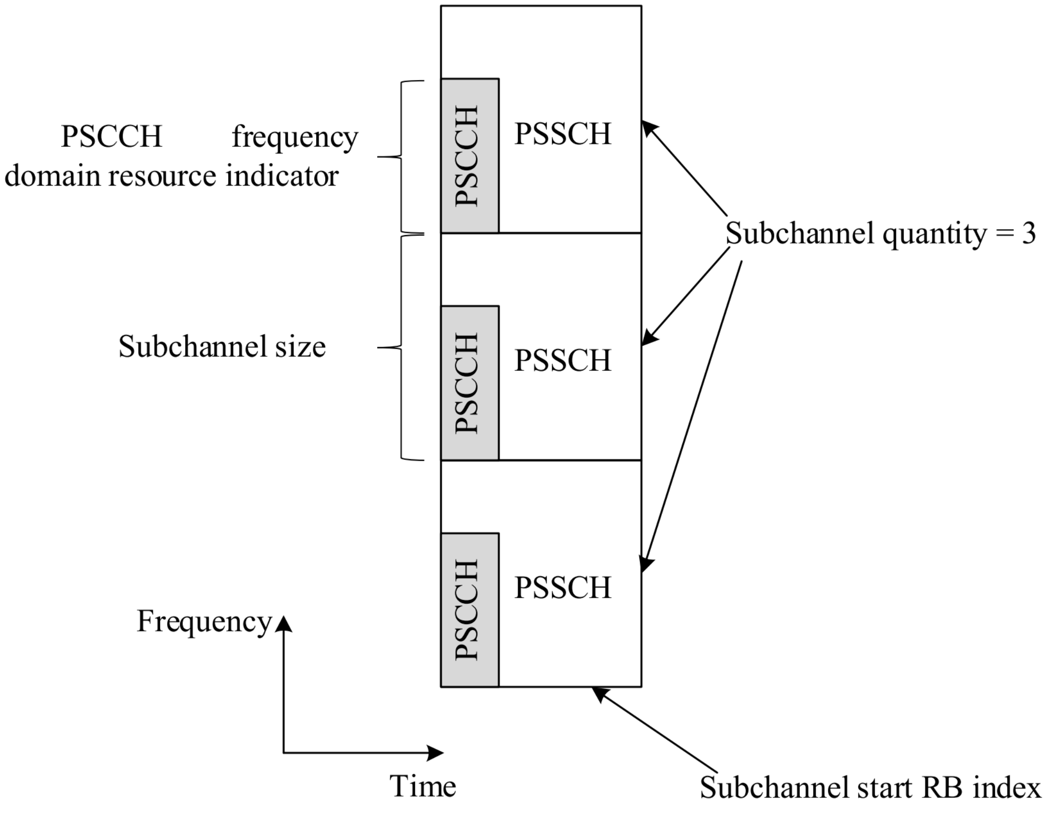
PSCCH frequency domain resource indicator
Subchannel size
PSCCH
PSSCH
PSCCH
PSSCH
PSCCH
PSSCH
Subchannel quantity = 3
Frequency
Time
Subchannel start RB index

FIG. 6

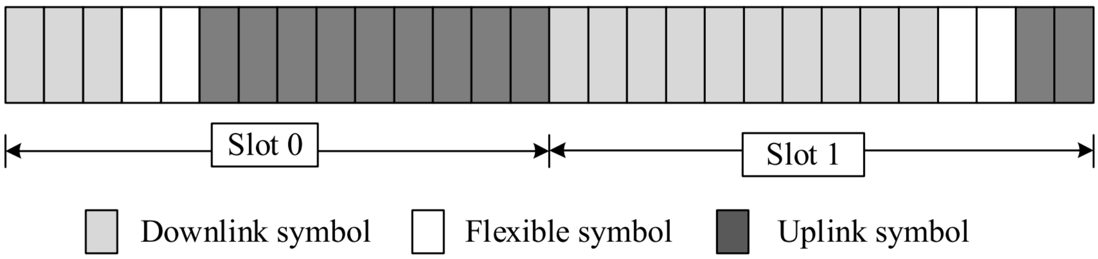


FIG. 7

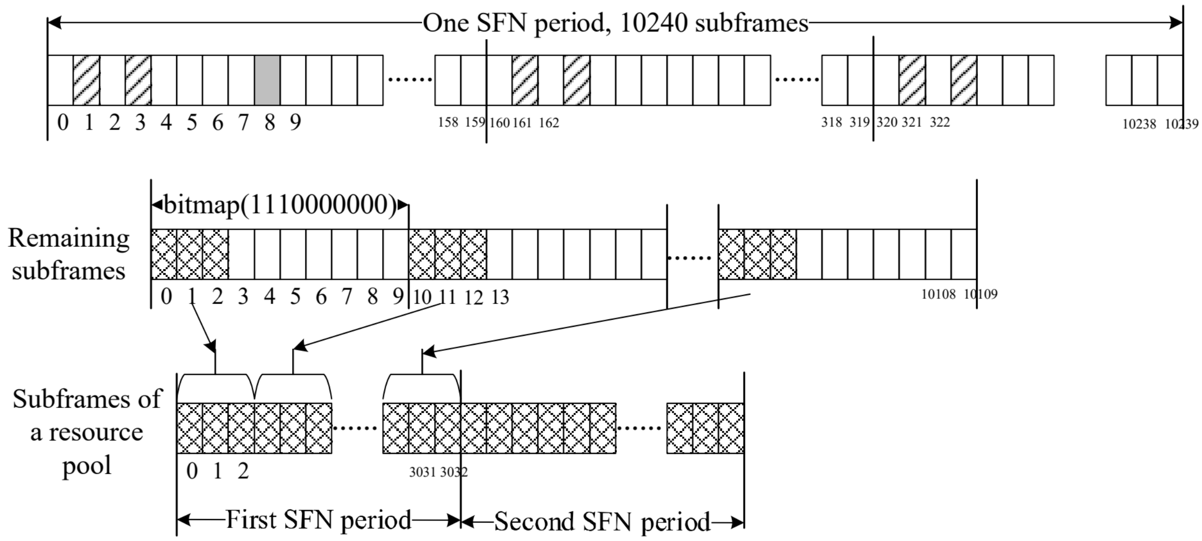


FIG. 8

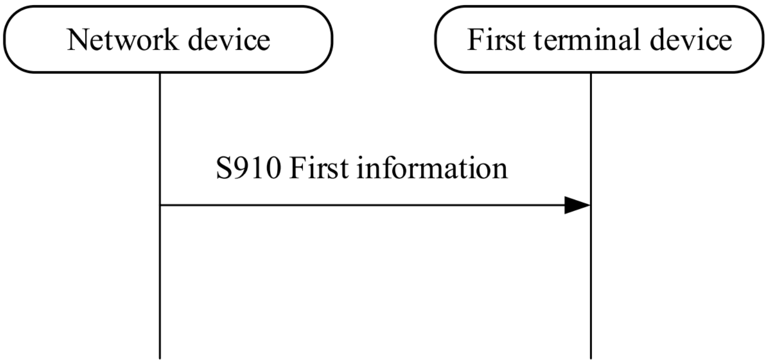


FIG. 9

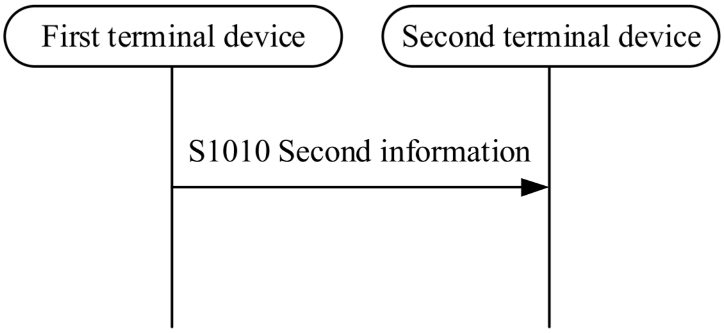


FIG. 10

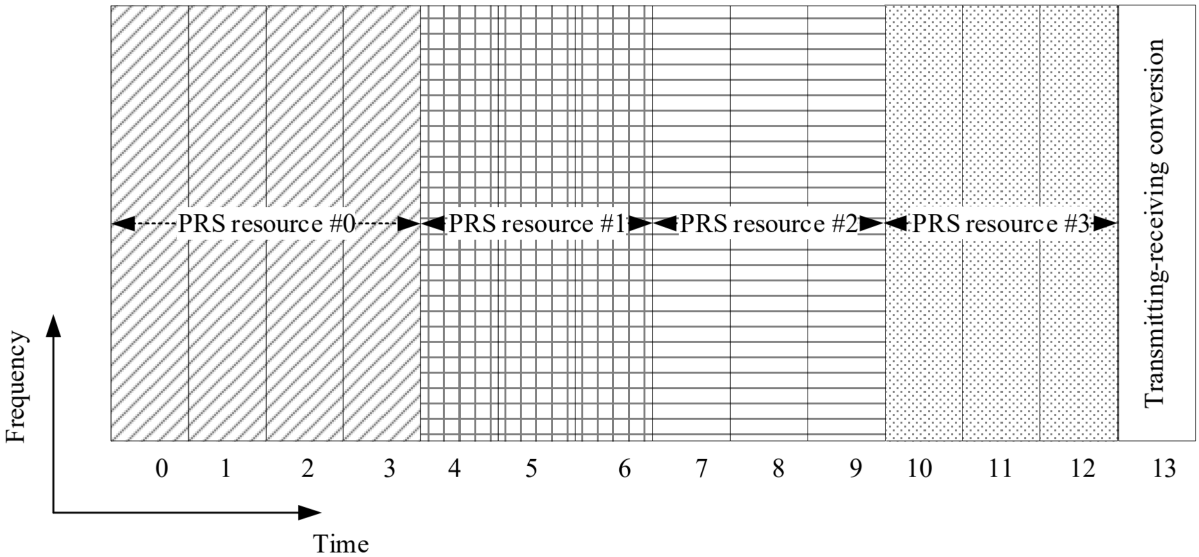


FIG. 11

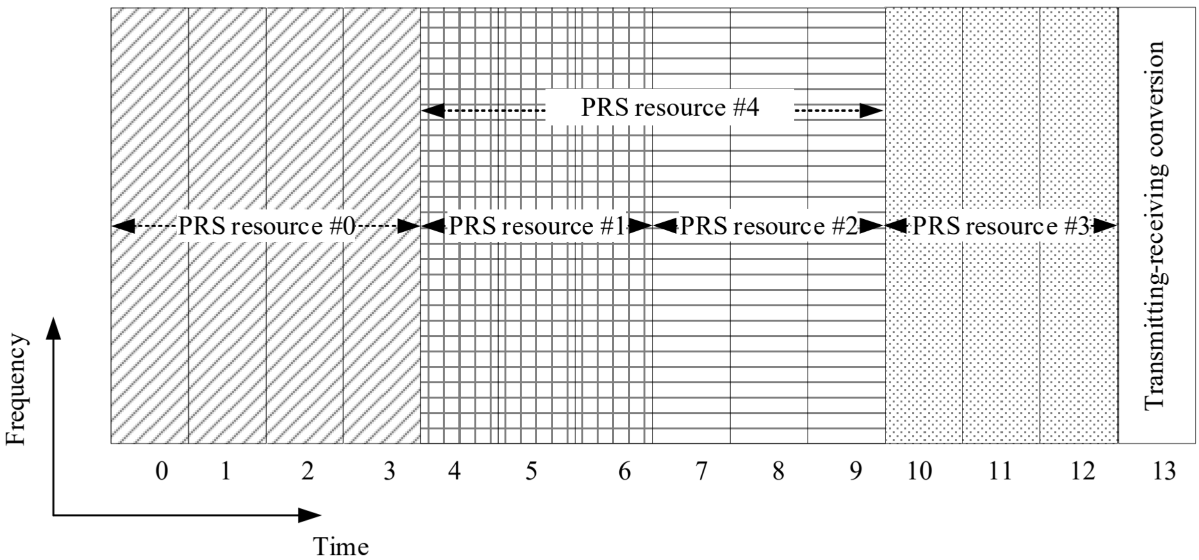


FIG. 12

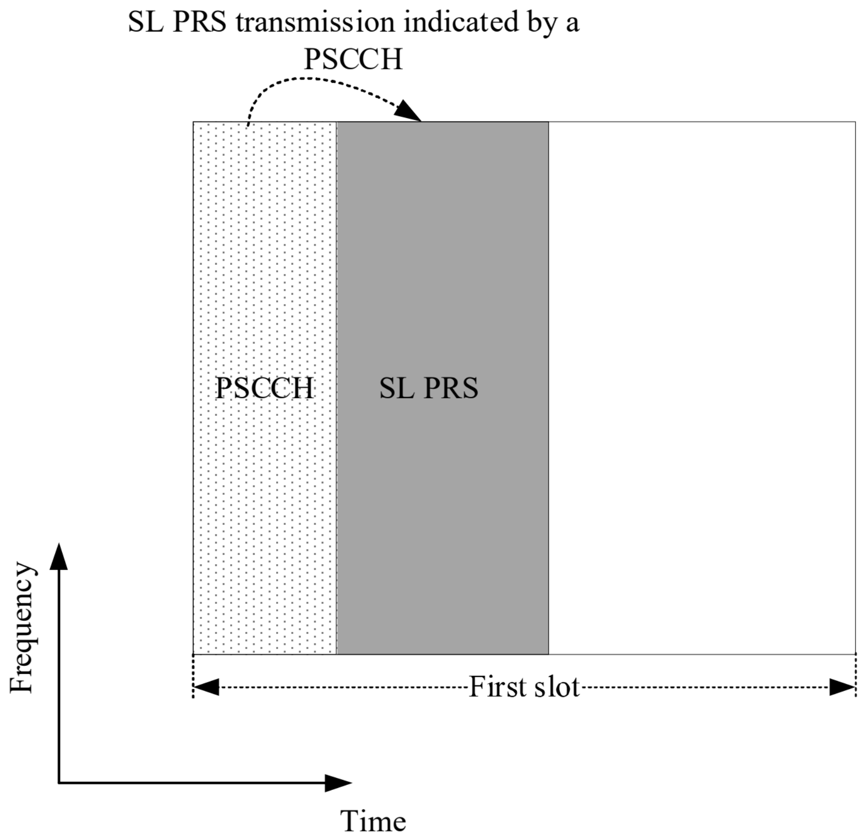
SL PRS transmission indicated by a PSCCH
PSCCH
SL PRS
Frequency
First slot
Time

FIG. 13

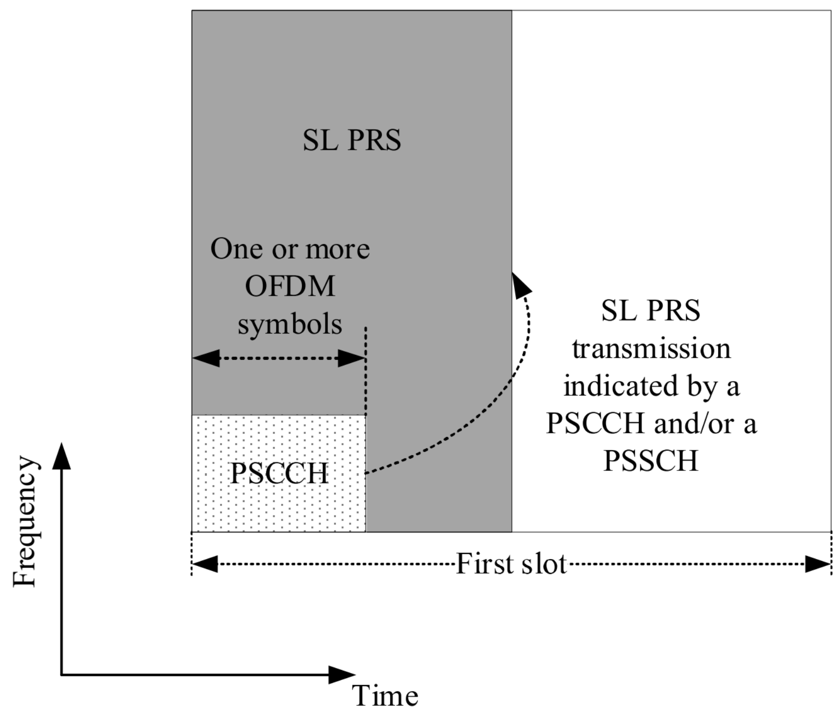
SL PRS
One or more OFDM symbols
PSCCH
SL PRS transmission indicated by a PSCCH and/or a PSSCH
Frequency
First slot
Time

FIG. 14

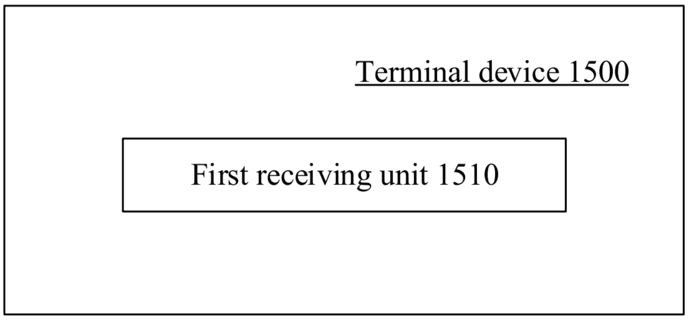


FIG. 15

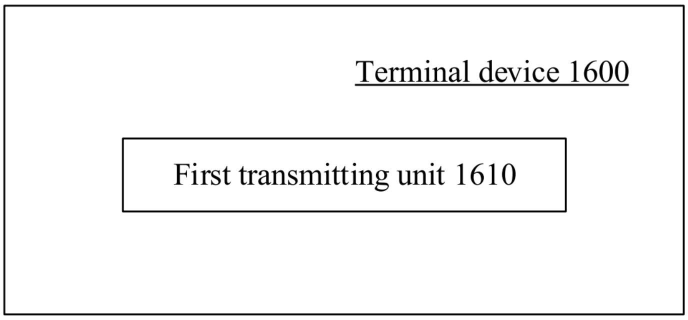


FIG. 16

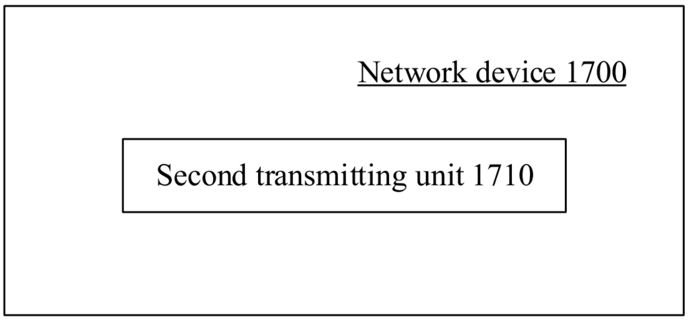


FIG. 17

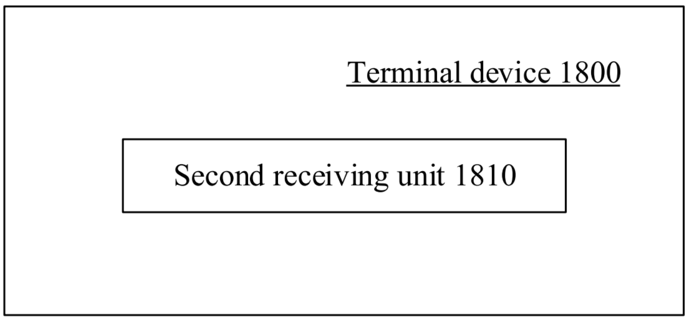


FIG. 18

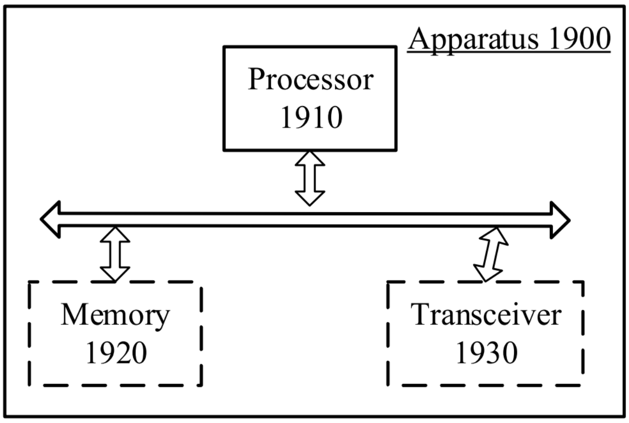
Apparatus 1900
Processor
1910
Memory
1920
Transceiver
1930

FIG. 19

## INTERNATIONAL SEARCH REPORT

International application No. **PCT/CN2023/075461**

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

IPC:H04L,H04W,G01S

Documentation searched other than minimum documentation to the extent that such documents are included in the fields searched

Electronic data base consulted during the international search (name of data base and, where practicable, search terms used)

3GPP, CNTXT, ENTXTC, WPABSC, VEN, CNKI: 发送, 传输, 指示, 侧行定位参考信号, 资源, 时隙, send, transmit+, indicat+, SL PRS, resource?, slot, OFDM, RRC, PC5, SCI

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. "R2-2212647 Discussion on SL-PRS Resource Allocation" *3GPP Tsg_ran\Wg2_rl2,* 04 November 2022 (2022-11-04), pages 1-3, sections 1-3 | 1, 11, 13, 27-28, 39-41, 51, 53, 67-68, 79-87 |
| Y | SAMSUNG. "R2-2212647 Discussion on SL-PRS Resource Allocation" *3GPP Tsg_ran\Wg2_rl2,* 04 November 2022 (2022-11-04), pages 1-3, sections 1-3 | 2-10, 12, 14-26, 29-38, 42-50, 52, 54-66, 69-78 |
| Y | WO 2023011347 A1 (DATANG GOHIGH INTELLIGENT AND CONNECTED TECHNOLOGY (CHONGQING) CO., LTD.) 09 February 2023 (2023-02-09) description, page 5, line 2-page 19, line 3 | 2-10, 12, 14-26, 29-38, 42-50, 52, 54-66, 69-78 |
| A | CN 115348606 A (CHINA ACADEMY OF INFORMATION AND COMMUNICATIONS TECHNOLOGY) 15 November 2022 (2022-11-15) entire document | 1-87 |
| A | WO 2022192873 A1 (QUALCOMM INC.) 15 September 2022 (2022-09-15) entire document | 1-87 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 October 2023** | **20 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/075461**

**C. DOCUMENTS CONSIDERED TO BE RELEVANT**

| Category* | Citation of document, with indication, where appropriate, of the relevant passages | Relevant to claim No. |
|---|---|---|
| A | WO 2023005837 A1 (VIVO MOBILE COMMUNICATION CO., LTD.) 02 February 2023 (2023-02-02)<br>entire document | 1-87 |

Form PCT/ISA/210 (second sheet) (July 2022)

**INTERNATIONAL SEARCH REPORT**
**Information on patent family members**

International application No.
**PCT/CN2023/075461**

| Patent document cited in search report | Publication date (day/month/year) | Patent family member(s) | Publication date (day/month/year) |
|---|---|---|---|
| WO 2023011347 A1 | 09 February 2023 | None | |
| CN 115348606 A | 15 November 2022 | None | |
| WO 2022192873 A1 | 15 September 2022 | TW 202241155 A | 16 October 2022 |
| WO 2023005837 A1 | 02 February 2023 | None | |

Form PCT/ISA/210 (patent family annex) (July 2022)